# EUROPEAN PATENT APPLICATION

(11) **EP 1 259 073 A1**
(43) Date of publication of application: **20.11.2002**
(21) Application number: 00981696.8
(22) Date of filing: 13.12.2000
(51) Int. Cl.: H04N 5/92, H04N 5/93, G11B 20/10

(54) **IMAGE REPRODUCING METHOD AND IMAGE PROCESSING METHOD, AND IMAGE REPRODUCING DEVICE, IMAGE PROCESSING DEVICE, AND TELEVISION RECEIVER CAPABLE OF USING THE METHODS**

(30) Priority: 15.12.1999 JP 35584099; 15.12.1999 JP 35585099; 15.12.1999 JP 35585899; 15.03.2000 JP 2000071783; 22.03.2000 JP 2000079543; 30.03.2000 JP 2000095698; 05.12.2000 JP 2000370469
(71) Applicant: SANYO ELECTRIC CO., LTD., Moriguchi-shi, Osaka 570-0083 (JP)
(72) Inventor: OKADA, Shigeyuki, Ogaki-shi, Gifu 503-0911 (JP); YAMAUCHI, Hideki, Og aki-shi, Gifu 503-0886 (JP)
(74) Representative: Cross, Rupert Edward Blount
(86) International application number: JP0008831
(87) International publication number: WO01045402

(57) **Abstract**

When a reverse reproduction is instructed in an image reproducing apparatus (1), reproduced image data per picture generated by an MPEG video decoder (5) in a time series manner are inputted to an MPEG video encoder (6) so as to be recoded to I picture alone or B picture combined with I picture. An MPEG video decoder 7 reads out this recoded data sequence in a reverse time-series manner and decodes it successively, and displays a smooth reverse reproduced image. As the case may be, a data amount reducing circuit which reduces resolution and a data amount restoring circuit which restores the resolution are inserted therebetween. The reverse reproduction which is superior in ease of operation, cost merit, implemented area and so forth is realized.

## Description

### TECHNICAL FIELD

The present invention relates to image reproducing method, image processing method, and image reproducing apparatus, image processing apparatus and television receiver which can use these methods. The present invention relates to technology in which to reproduce or process data coded according to, for example, the MPEG (Moving Picture Expert Group) standards.

### BACKGROUND TECHNOLOGY

Information handled in the multimedia is of a vast amount and is multifarious, thus a fast processing of these data is necessary in the course of planning to put the multimedia to practical use. In order to process information at high speed, compression and expansion of data become indispensable. The "MPEG" method is one of data compression and expansion techniques. An image processing apparatus utilizing the MPEG method is built into various image related devices such as movie camera, still camera, television set, video CD reproduction unit, DVD reproduction unit and so forth.

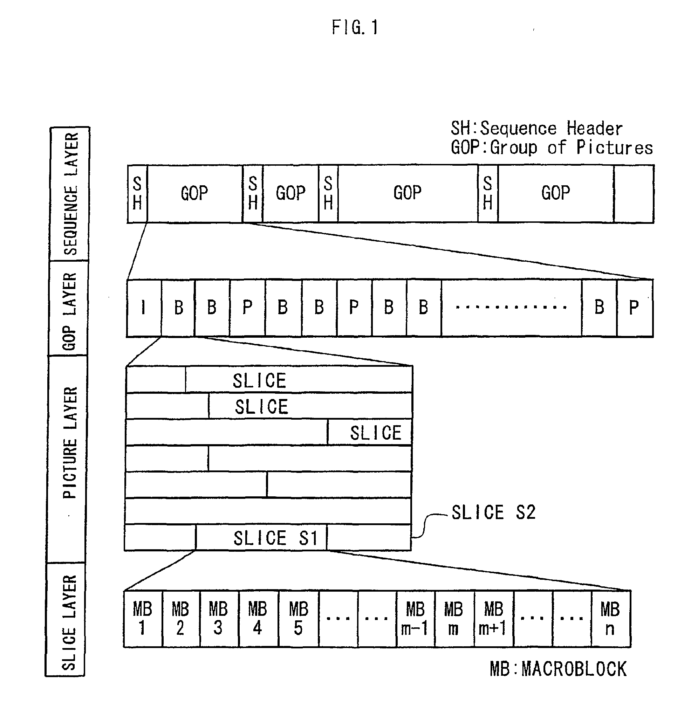

Video data handled in the MPEG relate to moving pictures, and the moving picture is constituted by a plurality of, say, 30 frames, per second that are still pictures or frames. As shown in Fig. 1, the video data are comprised of 6 layers that are a sequence layer, a GOP (group of pictures) layer, a picture layer, a slice layer, a macroblock layer and a block layer in this order. The number of the slices constituting a single picture is not fixed, and the number of the macroblocks constituting a single slice is also not fixed. The macroblock layer and the block layer are omitted in Fig. 1.

In the MPEG, the frame generally corresponds to the picture, but the frame or field can be associated with the picture. Two fields constitute one frame. The structure where a frame is associated with a picture is called a frame structure, while the structure where a field is associated with a picture is called a field structure.

In MPEG, a compression technique called inter-frame prediction is employed. The inter-frame prediction compresses inter-frame data based on a temporal correlation among frames. In the inter-frame prediction, bidirectional prediction is performed. The bidirectional prediction uses both forward prediction for predicting a current reproduced image from a past reproduced image or picture and backward prediction for predicting a current reproduced image from a future reproduced image.

This bidirectional prediction uses three types of pictures that are I picture (Intra-Picture), P picture (Predictive-Picture) and B picture (Bidirectionally predictive-Picture). An I picture is an image independently produced by an intra-frame coding processing, irrespective of past and future reproduced images. In order for a random access to be performed, at least one I picture is needed within the GOP. All of the macroblock type within the I picture are intra-frame prediction images. A P picture is produced by the intra-frame coding process using the forward prediction that is prediction from a past I or P picture. The macroblock type in the P picture includes both an intra-frame prediction image and a forward prediction image (Forward Inter Frame).

The B picture is produced by the inter-frame coding process using the bidirectional prediction. In the bidirectional prediction, a B picture is produced by one of the following three predictions.
① Forward Prediction; prediction from a past I picture or P picture.
② Backward prediction; prediction from a future I picture or P picture.
③ Bidirectional Prediction; prediction from a past and future I picture or P picture.

The macroblock type in the B picture includes four types of images that are an intra-frame prediction image, a forward prediction image, a backward prediction image (Backward Inter Frame), and an interpolative prediction image (Interpolative Inter Frame).

These I, P and B pictures are respectively coded. Namely, the I picture can be produced even when no past or future picture is available. On the contrary, the P picture can not be produced without the past pictures, and the B picture can not be produced without the past or future pictures. However, when the macroblock type is the interpolative prediction image for the P and B picture, the macroblock is produced even without the past or future pictures.

In the inter-frame prediction, an I picture is periodically produced first. Then, a frame several frames ahead of the I picture is produced as a P picture. This P picture is produced by prediction in one direction from the past to the present, namely, forward direction. Thereafter, a frame located before the I picture and after the P picture is produced as a B picture. When producing this B picture, the optimal prediction method is selected from among the three prediction methods which are the forward prediction, backward prediction and bidirectional prediction. In general, a current image and its preceding and succeeding images in consecutive motion pictures are similar to one another, and they differ only partially. Thus, it is assumed that the previous frame and the next frame are substantially the same. If there is a difference between both frames, that difference only is extracted and compressed. For example, if the previous frame is the I picture and the next frame is the P picture, the difference is extracted as B picture data. Thereby, the inter-frame data can be compressed based on the temporal correlation among frames. A data series or a bit stream of video data coded according to the MPEG video part in the above manner is called an MPEG video bit stream.

A core of moving picture compression by the MPEG lies in a motion compensated prediction (MC) and a discrete cosine transform (DCT). The coding technique combining MC and DCT is called the hybrid coding technique. The DCT (also referred to as forward DCT) is utilized in the MPEG at the time of the coding, so that video signals of the images are decomposed into a frequency component so as to be processed. Thereafter, at a stage of the decoding, the frequency component is restored to video signals by using the inverse discrete cosine transform (inverse DCT).

The MPEG can process a vast amount of information at high speed and the MPEG uses the compression technique called the inter-frame prediction described above. Thus, it is extremely difficult to reverse-reproduce a data sequence, for the purpose of a picture search, which is coded and recorded in a time-series manner according to the MPEG, namely, it is extremely difficult to reproduce the a recorded data series by simply going back along the time axis in the case of reproduction in the reverse direction as in the usual video tape recorder. Thus, it is conventionally performed that I picture alone allotted in each GOP is reproduced by going back along the time axis. Since the I picture is an image produced by the intra-frame coding processing as described above, it can be independently displayed without referring to pictures before and after it.

In the conventional examples, the number of the I picture allotted for each GOP is very small. For example, the number of the I picture allotted for each GOP is at most one among pictures constituting the GOP, and when the picture of per 15 to 30 frames is reverse reproduced, a smooth reverse-reproduced picture as in the usual video tape recorder is not obtained, so that it was difficult to stop at a desired scene at a proper timing. The present invention has been made in view of these points, and one of the objectives is to provide an image reproduction or image processing technique capable of obtaining a smooth reverse-reproduced picture.

In order to achieve this objective and other objectives which become clear in this patent specification, the present invention intends to solve the problems in the technique relating principally to the coding and decoding process of the image.

### DISCLOSURE OF THE INVENTION

One mode of the present invention relates to an image reproducing apparatus. This apparatus comprises: an encoder which codes image data as an intra-frame coded image; and a decoder which decodes coded data generated by this encoder in a reverse time-series manner. Here, "in an inverse time-series manner" means a state where the order of a finally displayed picture is reversed compared to a moment of the usual reproduction, or a state which induces an equivalent effect thereto substantially.

Another mode of the present invention relates also to an image reproducing apparatus. This apparatus comprises: a first decoder which decodes first coded data inputted in a time series manner; an encoder which codes image data generated by the first decoder as an intra-frame coded image; and a second decoder which decodes second coded data generated by the encoder in a reverse time-series manner. The apparatus may further comprise a storage unit which temporarily stores the second coded data and outputs the stored second coded data to the second decoder in a reverse time-series manner. This storage unit may store the second coded data and output the stored second coded data to the first decoder in a time series manner.

A first coded data sequence may be a data sequence coded by performing at least one of an intra-frame coding processing and an inter-frame coding processing on an image signal in a predetermined unit of group, and in that case each processing by the first decoder, encoder, storage unit and second decoder may be performed in the predetermined unit of group.

The first decoder may include a skip processing unit which thins out the inputted first coded data in units of picture. In that case, the thinned out data may be decoded and continuous time-series image data may be generated thereby.

The first decoder may include a discriminating unit which determines a type of picture of the inputted first coded data. In that case, the skip processing unit may thin out in a manner such that a picture of type, for example, B picture of MPEG, which is not referred to when decoding other pictures is given priority.

Still another mode of the present invention relates to an image reproducing method. The method includes a processing of converting image data inputted in a time series manner, to temporary coded data, by an intra-frame coding processing; and a processing of decoding the temporary coded data by reversing along time axis, wherein the converting processing is performed for a direct purpose of the decoding processing. "Temporary" means that it is not a final output form but a data format of a preliminary stage. "is performed for a direct purpose of" means that the both processings are performed integrally or continuously.

Still another mode of the present invention relates also to an image reproducing method. This method comprises: decoding first coded data inputted in a time series manner; converting the decoded data to temporary coded data by an intra-frame coding processing; and decoding the temporary coded data by reversing along time axis. The temporary coded data may be generated based on data thinned out in advance in units of picture. The first coded data may be generated by a processing which includes an inter-frame coding processing.

Still another mode of the present invention relates to an image reproducing apparatus. This apparatus comprises: an encoder which codes image data to a picture sequence of a type in which other picture of at most one is referred to for each prediction direction; and a decoder which decodes coded data generated by the encoder, in a reverse time-series manner.

In the "prediction direction" there are a forward direction and a reverse direction which correspond to prediction from the past and prediction from the future, respectively. "Other picture of at most one is referred to for each prediction direction" means that 0 or 1 picture only is referred to as to the forward direction as well as the reverse direction.

A group containing a plurality of pictures is regarded as a unit of processing and the first decoder may perform a processing on between groups in a reverse time-series manner by reversing along time axis while the first decoder performs a time series processing within the group. Moreover, first decoder may store decoded data of a reuse type picture, which is confirmed to be used for the processing of a next group, in a storage unit or the like which operates as a cache memory, when the processing is performed within the group. In that case, high speed processing can be achieved.

The first decoder decodes in compliance with MPEG or JPEG, the group is a GOP, and the storage unit may store the second coded data of a maximum of substantially 2 GOP's. Thereby, the switching between the forward reproduction and the reverse reproduction becomes smooth, and the time lag accompanied by the switching is likely to be eliminated with ease.

Moreover, there may be provided a television receiver equipped with any one of the above-described image reproducing apparatuses whereby reproduction of an image in a reverse time-series manner is included as part of operational specifications.

A mode of the present invention relates to an image processing apparatus. The apparatus comprises: a converter which converts a first coded data sequence including an I picture, P pictures and B pictures coded in compliance with MPEG, to a second coded data sequence constituted by I pictures and B pictures; a back-end decoder which decodes the second coded data sequence generated by the converter, in a reverse time-series manner; and a control unit which controls operation of the converter and back-end decoder. The back-end decoder corresponds to the above-described second decoder.

The converter may include: a front-end decoder which decodes at least P picture data among the first coded data sequence; an encoder which codes data decoded by the front-end decoder as an I picture in compliance with MPEG; and a storage unit which stores the second coded data sequence. The front-end decoder corresponds to the above-described first decoder.

The apparatus may further comprise an assignment control unit which assigns a B picture included in the first coded data sequence as it is, without performing processings by the front-end decoder and encoder thereon, as a B picture included in the second coded data sequence. In addition to the B picture, the I picture may be subjected to this processing.

The first coded data sequence may be data coded in a predetermined unit of group in a manner such that the pictures are assigned in a predetermined order, and in that case each processing by the converter and a back-end decoder may be performed in the predetermined unit of group.

Another mode of the present invention relates to an image processing method. This method includes: a processing which converts a first coded data sequence including an I picture, P pictures and B pictures coded in compliance with MPEG, to a second coded data sequence comprised of I pictures and B pictures; and a processing which decodes the second coded data sequence in a reverse time-series manner.

In this method, at least data excluding B pictures, among the first coded sequence, may be coded as an I picture in compliance with MPEG, and other data may be assigned, as kept intact, into the second coded data sequence.

The first coded data sequence may be data coded in a manner that the pictures are assigned in a predetermined order in predetermined units of group, and in that case the conversion processing and the decoding processing may be performed in the predetermined units of group. During execution of the decoding processing the conversion processing may be performed based on coded data of a next group.

Moreover, there may be provided a television receiver equipped with any one of the above-described image processing apparatuses, whereby reproduction of an image in a reverse time-series manner is included as part of operational specifications.

A mode of the present invention relates to an image processing apparatus. This apparatus comprises: a first decoder which decodes a first coded data sequence inputted; a display control unit which generates a video signal based on image data generated by the first decoder; an encoder which codes the image data generated by the first decoder as an intra-frame coded image; and a storage unit which stores a second coded data sequence generated by the encoder. The "display control unit" is sometimes called a display circuit and so forth.

The first coded data sequence may be a data sequence which is coded by performing at least one of an intra-frame coding processing or an inter-frame coding processing on an image signal in a predetermined unit of group, and in that case each processing by said first decoder, encoder and storage unit may be performed in units of group.

This apparatus may further comprise a second decoder which decodes the second coded data sequence stored in the storage unit in a reverse time-series manner. Moreover, there may be provided a switching unit which inputs image data generated by the first decoder to the display control unit at the time of forward reproduction, and inputs image data generated by the second decoder to the display control unit at the time of reverse reproduction.

Another mode of the present invention relates to an image processing method. This method comprises: decoding an inputted first coded data sequence in a time series manner; coding the decoded data as an intra-frame coded image so as to be stored to, for example, a memory while generating a video signal based on the decoded data in parallel. The coded data sequence stored may be decoded by reversing along time axis, and the video signal may be generated based on the decoded data. Thereby, a reverse reproduction picture is obtained.

Still another mode of the present invention relates to an image processing apparatus. The apparatus comprises: a first decoder which decodes a first coded data sequence inputted; a display control unit which generates a video signal based on image data generated by the first decoder; an encoder which codes the image data generated by the first decoder to a sequence of picture that is of a type where other picture of at most one is referred to for each prediction direction; and a storage unit which stores a second coded data sequence generated by this encoder.

Still another mode of the present invention relates to an image processing method. This method comprises: decoding a first coded data sequence inputted in a time series manner; coding the decoded data to a picture sequence of a type where other picture of at most one is referred to for each prediction direction so as to be stored while generating a video signal based on the decoded data in parallel.

Moreover, there may be provided a television receiver equipped with an image processing apparatus recited in any of the above described, where generation of a video signal is consigned to the image processing apparatus.

A mode of the present invention relates to an image processing apparatus. This apparatus comprises: a reduction processing unit which reduces a data amount of image data; an encoder which codes image data from the reduction processing unit as an intra-frame coded image; a back-end decoder which decodes a coded data sequence generated by the encoder in a reverse time-series manner; and a control unit which controls a series of processings in an overall and supervised manner. The "back-end decoder" is placed behind the encoder, and is also called "the second decoder" as found in the present patent specifications.

Another mode of the present invention relates also to an image processing apparatus. This apparatus comprises: a front-end decoder which decodes a first coded data sequence; a reduction processing unit which reduces a data amount of image data generated by the front-end decoder; an encoder which codes image data from the reduction processing unit as an intra-frame coded image; a back-end decoder which decodes a coded data sequence generated by the encoder in a reverse time-series manner; and a control unit which controls a series of processings in an overall and supervised manner. It may further comprise a restoration processing unit which substantially restores a data amount of the image data decoded by the back-end decoder. The "front-end decoder" is placed in the front stage of the encoder, and is also called the "first decoder" as found in the present patent specifications.

The reduction processing unit may thin out the image data in units of frame and may reduce the number of pixels. The restoration processing unit may repeatedly output image data decoded by the back-end decoder, and in that case can offset the effect caused by the thinning in units of frame.

The first coded data sequence may be a data sequence coded by performing at least one of an intra-frame coding processing and an inter-frame coding processing on an image signal in a predetermined unit of group, and in that case a series of processings based on control of the control unit may be performed in the predetermined unit of group.

The front-end decoder may include a skip processing unit which thins out the inputted first coded data sequence in units of frame. In that case, data thinned out by the skip processing unit may be decoded and continuous time-series image data may be generated.

Another mode of the present invention relates to an image processing method. This method includes: a processing of reducing a data amount of image data inputted; a processing of coding image data whose data amount is reduced, as an intra-frame coded image; a processing of decoding an coded data sequence thereof by reversing along time axis; and a processing of substantially restoring a data amount of decoded image data.

Still another mode of the present invention relates also to an image processing method. This method includes: a processing of decoding a first coded data sequence inputted; a processing of reducing a data amount of decoded data thereof; a processing of coding image data whose data amount is reduced, as an intra-frame coded image; a processing of decoding a coded data sequence thereof by reversing along time axis; and a processing of substantially restoring a data amount of decoded image data.

Still another mode of the present invention relates to an image processing apparatus. This apparatus comprises: an reduction processing unit which reduces a data amount of image data; an encoder which codes the image data from the reduction processing unit, to a picture sequence of a type in which other picture of at most one is referred to for each prediction direction; a decoder which decodes a coded data sequence generated by the encoder in a reverse time-series manner; and a control unit which controls a series of processings in an overall and supervised manner.

Still another mode of the present invention relates to an image processing method. This method includes: a processing of reducing a data amount of image data inputted; a processing of coding image data whose data amount is reduced, to a sequence of picture that is of a type where other picture of at most one is referred to for each prediction direction; a processing of decoding a coded data sequence thereof by reversing along time axis; and a processing of substantially restoring a data amount of decoded image data.

Moreover, there may be provided a television receiver equipped with an image processing apparatus recited in any of the above-described, whereby a reverse time-series reproduction of an image is included as part of operational specifications thereof.

A mode of the present invention relates to an image processing apparatus. In this apparatus, a decoder for first picture data comprised of a plurality of pictures and a decoder for second picture data which appear at a processing stage different from that of the first picture data, are put to common use. The "different processing stage" indicates that processing conditions differ, in a broad sense, such as a content, place, timing and so forth of the processing. Moreover, the apparatus may be such that the encoder is put to common use in place of the decoder. This apparatus may include a switching unit which switches the first picture data and the second picture data for every predetermined picture so as to be inputted to the decoder.

This apparatus may further comprise an encoder which codes data decoded by the decoder as an intra-frame coded image, based on the first picture data. Moreover, it may include a storage unit which temporarily stores data coded by the encoder and outputs the stored data to the decoder as the second picture data in a reverse time-series manner.

The first picture data may be data coded by performing at least one of an intra-frame coding processing and an inter-frame coding processing on an image signal in a predetermined unit of group, and in that case each processing by the decoder, encoder and storage unit may be performed in the predetermined unit of group.

A first decoder may include a skip processing unit which thins out the inputted first coded data in units of picture, and in that case the data thinned out by the skip processing unit may be decoded and continuous time-series image data may be generated.

The first decoder may include a discriminating unit which determines a type of picture of the inputted first coded data, and in that case the skip processing unit may thin out in a manner such that a picture of type which is not referred to when decoding other pictures is given priority.

Another mode of the present invention relates to an image processing method. This method includes: decoding, for every predetermined picture, first picture data comprised of a plurality of pictures and second picture data, comprised of a plurality of pictures, which appear at a processing stage different from that of the first picture data. Then, data which are sequentially decoded based on the first picture data may be coded as an intra-frame coded image. The second picture data may be generated by storing temporarily the coded data and reading the stored data in a reverse time-series manner.

The first picture data are data coded by performing at least one of an intra-frame coding processing and an inter-frame coding processing on an image signal in a predetermined unit of group, and the coding may be performed in the predetermined unit of group.

Still another mode of the present invention relates also to an image processing method. In this method, first picture data comprised of a plurality of pictures and second picture data comprised of a plurality of pictures are coded for every predetermined picture.

Moreover, there may be provided a television receiver equipped with an image processing apparatus according to any of the above described, wherein the decoder or encoder is put to common use.

A mode of the present invention relates to an image reproducing apparatus. This apparatus includes a decoder which decodes, in a reverse time-series manner, coded data generated in a time series manner, and which repeatedly outputs image data obtained by the decoding until the number of times set is reached. The "number of times set" is desirable if it is greater than or equal to two, and it may be fixed or it can be set by a user.

Another mode of the present invention relates also to an image reproducing apparatus. This apparatus comprises: an encoder which codes image data inputted in a time series manner, as an intra-frame coded image; and a decoder which decodes coded data generated by the encoder, in a reverse time-series manner, so as to be repeatedly outputted. The processing by the encoder may be performed in a manner such that a processing of a decoder is a direct purpose. Still another mode of the present invention relates also to an image reproducing apparatus. This apparatus comprises: a first decoder which decodes first coded data inputted in a time series manner; an encoder which codes image data generated by the first encoder, as an intra-frame coded image; and a second decoder which decodes second coded data generated by the encoder, in a reverse time-series manner, so as to be repeatedly outputted. The encoder may code one among the same image data outputted from the first decoder a plurality of times. Then, the number of outputs of the same image data by the first decoder may be set to equal to that of the same image data by the second decoder.

There may be provided a storage unit which stores temporarily the second coded data and outputs the stored second coded data to the second decoder in a reverse time-series manner.

The first coded data sequence may be data coded by performing at least one of an intra-frame coding processing and an inter-frame coding processing on an image signal in a predetermined unit of group, and each processing by the first decoder, encoder, storage unit and second decoder may be performed in the predetermined unit of group.

Still another mode of the present invention relates an image reproducing method. This method includes decoding continuous time-series coded data by reversing along time axis and repeatedly outputting the decoded data until the predetermined number of times set is reached.

Still another mode of the present invention relates also to an image reproducing method. This method includes: coding image data inputted in a time series manner, as an intra-frame coded image; and decoding the coded data by reversing along time axis so as to be repeatedly outputted.

Still another mode of the present invention relates also to an image reproducing method. This method includes: decoding first coded data inputted in a time series manner; coding the decoded data as an intra-frame coded image; and decoding the coded data in a reverse time-series manner so as to be repeatedly outputted.

Still another mode of the present invention relates also to an image reproducing method. This method includes: decoding fist coded data inputted in a time series manner, and repeatedly outputting the decoded data; coding one among the repeatedly outputted continuous same decoded data, as an intra-frame coded image; and decoding the coded data in a reverse time-series manner and repeatedly outputting the decoded data.

Still another mode of the present invention relates to an image reproducing apparatus. This apparatus includes a decoder which decodes, in a reverse time-series manner, coded data which were generated in a time-series manner after going through a processing including an inter-frame coding processing, so as to be repeatedly outputted.

Still another mode of the present invention relates also to an image reproducing apparatus. This apparatus comprises: an encoder which codes image data inputted in a time series manner to a picture sequence of a type in which other picture of at most one is referred to for each prediction direction; and a decoder which decodes, in a reverse time-series manner, coded data generated by the encoder, and repeatedly outputs the decoded data.

Still another mode of the present invention relates to an image reproducing method. This method comprises: coding image data inputted in a time series manner to a picture sequence of a type in which other picture of at most one is referred to for each prediction direction; and decoding the coded data by reversing along time axis, and repeatedly outputting the decoded data.

Still another mode of the present invention relates to an image reproducing method. This method comprises: acquiring continuous time-series coded data which are generated after going through a processing including an inter-frame coding processing; decoding the coded data by reversing along time axis; and repeatedly outputting the decoded data.

Moreover, there may be provided a receiver equipped with any one of the above-described image reproducing apparatus, whereby a reverse-time series repeat-reproduction of an image is included as part of operational specifications thereof.

In any case of the above described, the coding or the decoding, and a processing accompanied by these as the case may be, may be performed in a predetermined unit of group. Moreover, different combinations of the above-described arbitrary structural components and processing processes and so forth, as well as expressions of the present invention transferred between a method, an apparatus, a system, a computer program and a recording medium, etc. are still effective as an embodiment of the present invention.

### BRIEF DESCRIPTION OF THE DRAWINGS

The above described objectives, other objectives, features and advantages are further made clear by the following preferred embodiments and drawings accompanied thereby.
Fig. 1 is provided for explanation of hierarchical structure of MPEG video bit stream.
Fig. 2 a block circuit diagram of an image reproducing apparatus according to the first embodiment.
Fig. 3 is a schematic block diagram showing a decoder according to the first embodiment.
Fig. 4 is a schematic block diagram showing an encoder according to the first embodiment.
Fig. 5 is a schematic block diagram showing a decoder according to the first embodiment.
Fig. 6 is a flowchart showing reverse reproduction operation of the image reproducing apparatus according to the first embodiment.
Fig. 7 is a flowchart showing of forward reproduction operation of the image reproducing apparatus according to the first embodiment.
Fig. 8 is a block circuit diagram of an image reproducing apparatus according to the third embodiment.
Fig. 9 is an explanatory drawing for explaining reverse reproduction operation of an image reproducing apparatus according to the fifth embodiment.
Fig. 10 is a block circuit diagram of an image reproducing apparatus according to the sixth embodiment.
Fig. 11 is a schematic block diagram showing a decoder according to the sixth embodiment.
Fig. 12 is a flowchart showing reverse reproduction operation of an image reproducing apparatus according to the sixth embodiment.
Fig. 13 is a block circuit diagram of an image reproducing apparatus according to the seventh embodiment.
Fig. 14 shows a block circuit of an image reproducing apparatus according to the eighth embodiment.
Fig. 15 is a schematic block diagram showing a structure of the data amount reducing circuit according to the eighth embodiment.
Fig. 16 is a schematic circuit diagram of the digital filter unit shown in Fig. 15.
Fig. 17 is a schematic block diagram showing a structure of the data amount restoring circuit according to the eighth embodiment.
Fig. 18 is a schematic circuit diagram of the digital filter unit shown in Fig. 17.
Fig. 19 is a flowchart showing the reverse reproduction operation of the image reproducing apparatus in the eighth embodiment.
Fig. 20 shows a block circuit diagram of an image reproducing apparatus according to the ninth embodiment.
Figs. 21(a) and 21(b) show examples of other circuit structures of the data amount reducing circuit and the data amount restoring circuit, respectively.
Fig. 22 is provided for explaining reverse reproduction whose speed is made faster by the caching of I pictures.
Fig. 23 is a structural diagram of a television receiver according to the eleventh embodiment where the image reproducing apparatus or the image processing apparatus according to any of the present embodiments is incorporated.

### THE BEST MODE FOR CARRYING OUT THE INVENTION

Embodiments which embody the present invention will be described. The processings common to some of the embodiments are forward image reproduction and reverse image reproduction. For the convenience of description, "forward" and "reverse" and their synonyms in the following description should be understood to apply to the order when pictures comprising an image are finally put in a form for display. Hence, unless otherwise indicated, the order of pictures represents the state of display.

As will be described later, even in reverse reproduction, the pictures in each GOP of an MPEG data stream are first decoded in the forward direction, namely, in a time series manner. They are recoded and the reverse order is realized for the first time at the stage of the subsequent redecoding. Accordingly, "reverse" in reverse reproduction concerns mainly the second decoding.

There can be a variety of combinations of MPEG bit stream in terms of the order of I, P and B pictures. For the simplicity of explanation hereafter, however, the bit stream is to be "I₁B₂B₃P₄B₅B₆P₇B₈B₉ ..." and the display order of pictures, on the other hand, is determined to be "B₂B₃I₁B₅B₆P₄B₈B₉P₇ ...."

Various component members appear in the following embodiments. In terms of hardware, those embodiments can be realized by a CPU, memory and other LSIs and combined circuit. In terms of software, they are realized by memory-loaded programs or the like with image processing functions. The following description mainly concerns the functions that are realized in cooperation with such components. Therefore, it should be understood by those skilled in the art that these functions can be realized in a variety of forms by hardware only, software only or by the combination thereof.

### (First embodiment)

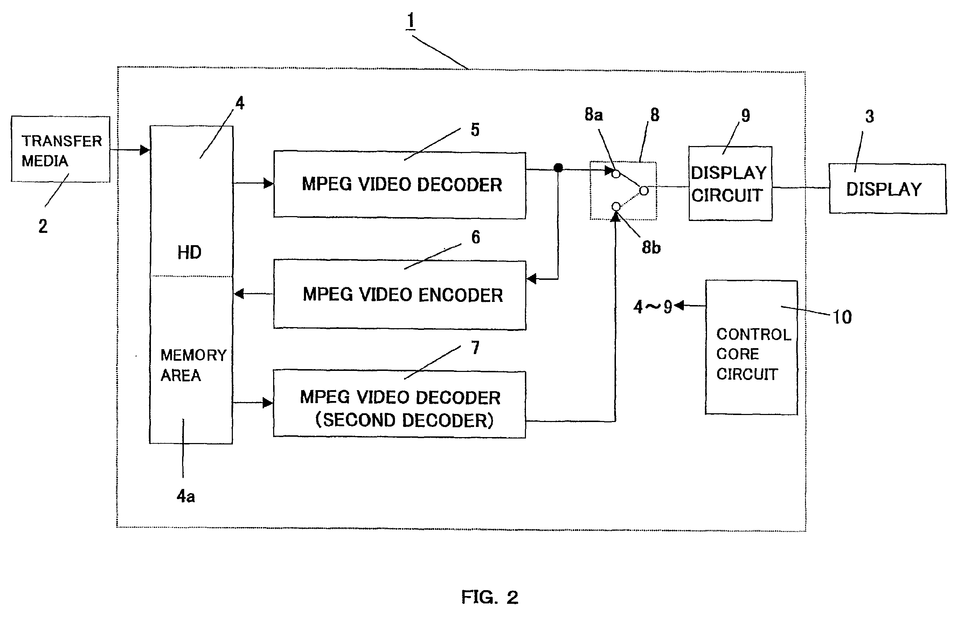

Fig. 2 shows a block circuit of an image reproducing apparatus 1 according to a first embodiment. This image reproducing apparatus 1 is incorporated into a movie camera, a still camera, a television, a video CD reproduction apparatus or a DVD reproduction apparatus, which outputs the MPEG video stream from a transfer medium 2 to a display 3. The transfer medium 2, by the way, includes storage medium (video CD, CD-ROM, DVD, VTR and so forth), communication medium (LAN and so forth) and broadcasting medium (ground wave broadcasting, satellite broadcasting, CATV and so forth). Moreover, when the data from a storage medium or broadcasting medium are the data which are not coded according to the MPEG video part, the transfer medium also includes an MPEG video encoder which carries out the coding of the digital data. When the image reproducing apparatus 1 is incorporated into a movie camera or a still camera, the transfer medium 2 is replaced by an imaging device, such as a CCD, and its signal processing circuit.

In Fig. 2, the image reproducing apparatus 1 comprises a hard disk (HD) 4, an MPEG video decoder 5 (hereinafter referred to simply as "decoder 5" also), an MPEG video encoder 6 (hereinafter referred to simply as "encoder 6" also), a second MPEG video decoder 7 (hereinafter referred to simply as "second decoder 7" also), a switching circuit 8, a display circuit 9 and a control core circuit 10. The whole or the main part of the image reproducing apparatus 1 may be mounted on a single chip of LSI, and this applies to other embodiments. The control core circuit 10 controls the operation of the decoder 5, the second decoder 7, the encoder 6 and each component of the image reproducing apparatus 1. The hard disk 4, which is comprised of a magnetic disk, stores the video stream transferred from the transfer medium 2 successively. The hard disk 4 is provided with a special memory area 4a within it.

The switching circuit 8 can switch its own connection to a first node 8a side or a second node 8b side according to the control by the control core circuit 10. When the switching circuit 8 is connected to the first node 8a side, forward reproduction is performed, in which a reproduced image data sequence produced by the decoder 5 is inputted, as kept intact, to the display circuit 9. When connected to the second node 8b side, data from the second decoder 7 are inputted to the display circuit 9 to perform reverse reproduction as described later.

The display circuit 9 produces an image video signal from picture data transferred from the decoder 5 or the second decoder 7 and outputs this to the display 3 which is connected to the image reproducing apparatus 1.

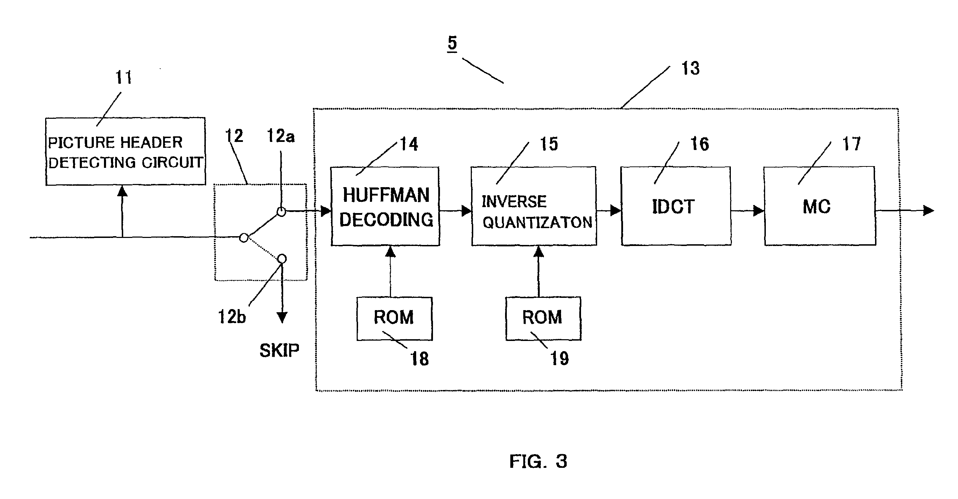

Fig. 3 is a block diagram showing a structure of the decoder 5. In the same figure, the decoder 5 is comprised of a picture header detecting circuit 11, a picture skip circuit 12 and a decode core circuit 13, and the decode core circuit 13 is comprised of a Huffman decoding circuit 14, an inverse quantization circuit 15, an IDCT (Inverse Discrete Cosine Transform) circuit 16, an MC (Motion Compensated prediction) circuit 17 and ROMs (Read Only Memories) 18 and 19. It is to be noted that the decoder 5 is an example of the "first decoder" in the present invention.

The picture header detecting circuit 11 detects a picture header placed at the head of each picture of the video stream stored in the hard disk 4 and detects the picture type (I, P, B) specified in that part.

The picture skip circuit 12 switches its own connection to the first node 12a or the second node 12b side according to the control by the control core circuit 10. And when the picture skip circuit 12 is connected to the first node 12a side, pictures read out from the hard disk 4 are transferred, as kept intact, to the decode core circuit 13. Or when connected to the second node 12b side, pictures read out from the hard disk 4 are skipped without being transferred to the decode core circuit 13. As a result, the pictures transferred to the decode core circuit 13 are thinned out in units of picture.

However, in the present embodiment, the picture skip circuit 12 is fixedly connected to the first node 12a. Hence, the picture header detecting circuit 11 and the picture skip circuit 12 can be omitted as appropriate in realizing the image reproducing apparatus 1 according to the present embodiment.

The Huffman decoding circuit 14 carries out variable-length decoding of the pictures read out from the hard disk 4 according to the Huffman code held in a Huffman table which is stored in the ROM 18. The inverse quantization circuit 15 obtains a DCT (Discrete Cosine Transform) coefficient by performing an inverse quantization, based on a quantization threshold value held in a quantization table stored in the ROM 19, against results of decoding by the Huffman decoding circuit 14. The IDCT circuit 16 carries out an IDCT for the DCT coefficient obtained by the inverse quantization circuit 15. The MC circuit 17 performs an MC (Motion Compensated prediction) on the results of processing by the IDCT circuit 16.

In this manner, the decoder 5 generates a reproduced image data sequence continuous in a time series manner by decoding the inputted MPEG video stream. It is to be noted that the MPEG video stream is an example of the "first coded data sequence" in the present invention.

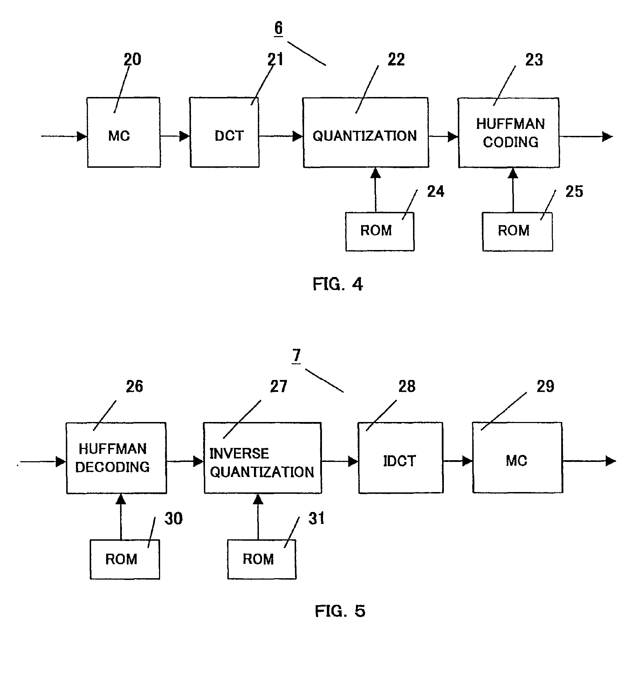

Fig. 4 is a block diagram showing a structure of the encoder 6. The encoder 6 codes all the reproduced image data sequence generated by the decoder 5 as I pictures, namely, intra-frame coded images, in units of picture. In Fig. 4, the encoder 6 is comprised of an MC circuit 20, a DCT circuit 21, a quantization circuit 22, a Huffman coding circuit 23 and ROMs 24 and 25. It is to be noted that the encoder 6 is an example of the "encoder" in the present invention.

The MC circuit 20, which is primarily designed to carry out MC for the reproduced image data decoded by the decoder 5, does not perform a processing because the encoder 6 according to the present embodiment generates all the inputted reproduced image data as I pictures by an intra-frame coding processing. Thus, the MC circuit 20 can be omitted as appropriate.

The DCT circuit 21 takes in the reproduced image data inputted from the decoder 5 in units of block and generates a DCT coefficient by carrying out a two-dimensional discrete cosine transformation. The quantization circuit 22 performs quantization by referring to a quantization threshold value held in a quantization table stored in the ROM 24. It is to be noted that the ROM 19 may serve also as the ROM 24.

The Huffman coding circuit 23 generates compressed image data in units of picture by performing a variable-length coding on the quantized DCT coefficient by referring to a Huffman code held in a Huffman table stored in the ROM 25. It is to be noted that the ROM 18 may serve also as the ROM 25.

The reproduced image data sequence generated by the decoder 5 is stored in the memory area 4a allocated within the hard disk 4 after it is all coded into I pictures in units of picture by the encoder 6. The capacity of this memory area 4a is sufficient if it is equivalent to one GOP of the MPEG video stream to be inputted. It is to be noted that the memory area 4a is an example of a "storage unit" in the present invention.

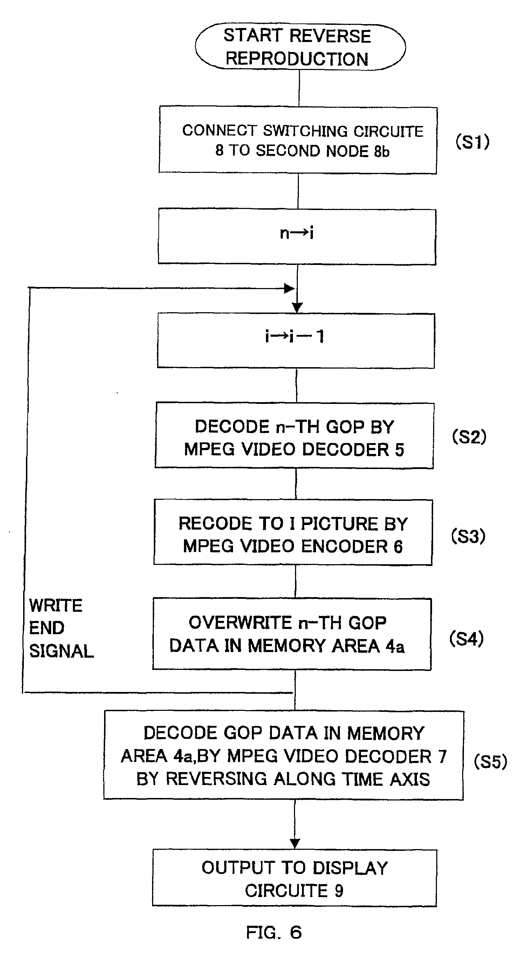

Fig. 5 is a block diagram showing a structure of the second decoder 7. In the same figure, the second decoder 7 is comprised of a Huffman decoding circuit 26, an inverse quantization circuit 27, an IDCT circuit 28, an MC circuit 29 and ROMs 30 and 31. It is to be noted that the second decoder 7 is an example of the "decoder" and the "second decoder" in the present invention.

The structure of this second decoder 7 is similar to that of the decode core circuit 13 in the decoder 5. Thus, a Huffman decoding circuit 26 has the similar structure to that of the Huffman decoding circuit 14, an inverse quantization circuit 27 has the similar structure to that of the inverse quantization circuit 15, an IDCT circuit 28 has the similar structure to that of the IDCT circuit 16, and an MC circuit 29 has the similar structure to that of the MC circuit 17. However, as will be described later, the MC circuit 29 does not perform a processing because the image data sequence inputted to the second decoder 7 is data all coded into I pictures. Hence, the MC circuit 29 can be omitted as appropriate. It is to be noted that other ROM such as the ROM 18 or the ROM 25 may server also as the ROM 30, and the ROM 19 or the ROM 24 may serve also as the ROM 31. The reproduced image data sequence decoded by the second decoder 7 is inputted to the display circuit 9 from the second node 8b of the switching circuit 8.

Based on the above-described structure, an operation of reverse reproduction in the image reproducing apparatus 1 according to the present embodiment will be explained, referring to the flowchart shown in Fig. 6. The operation of the image reproducing apparatus 1 is carried out under the control of the control core circuit 10. Here, it is supposed that the MPEG video stream is comprised of i units of GOPs (GOP₀ to GOPᵢ₋₁).

In reverse reproduction, each GOP is processed sequentially from GOPᵢ₋₁ by reversing along the time axis. However, the pictures in each GOP are decoded forward, namely, in a time-series manner, at the decoder 5. With reverse reproduction instructed, the switching circuit 8 is connected to the second node 8b (S1), the MPEG video stream corresponding to GOPᵢ₋₁ is read out in units of picture from the hard disk 4 and inputted to the decoder 5, and picture by picture of reproduced image data are generated sequentially in a time series and inputted to the encoder 6 (S2). At the encoder 6, the reproduced image data sequence, for one GOP, inputted from the decoder 5 is all recoded into I pictures (S3). The recoded data sequence for one GOP from the encoder 6 is overwritten in the memory area 4a of the hard disk 4 (S4).

Upon completion of writing in the memory area 4a, the second decoder 7 reads out the recoded data sequence stored in this memory area 4a in a reverse time-series manner, namely, by going back along the time axis, decodes it sequentially and outputs it to the display circuit 9. With the end of writing in the memory area 4a, a write end signal is sent out, the MPEG video stream corresponding to a next GOPᵢ₋₂ is inputted to the encoder 5, and the processing from S2 is performed (S5). Namely, in S5, while the data sequence for one GOP is being decoded at the second decoder 7, the data sequence for the next 1 GOP is being decoded at the decoder 5. To the display circuit 9, the reproduced image data are inputted in a reverse time-series manner from the second decoder 7, so that the reverse-reproduced picture are displayed on the display 3.

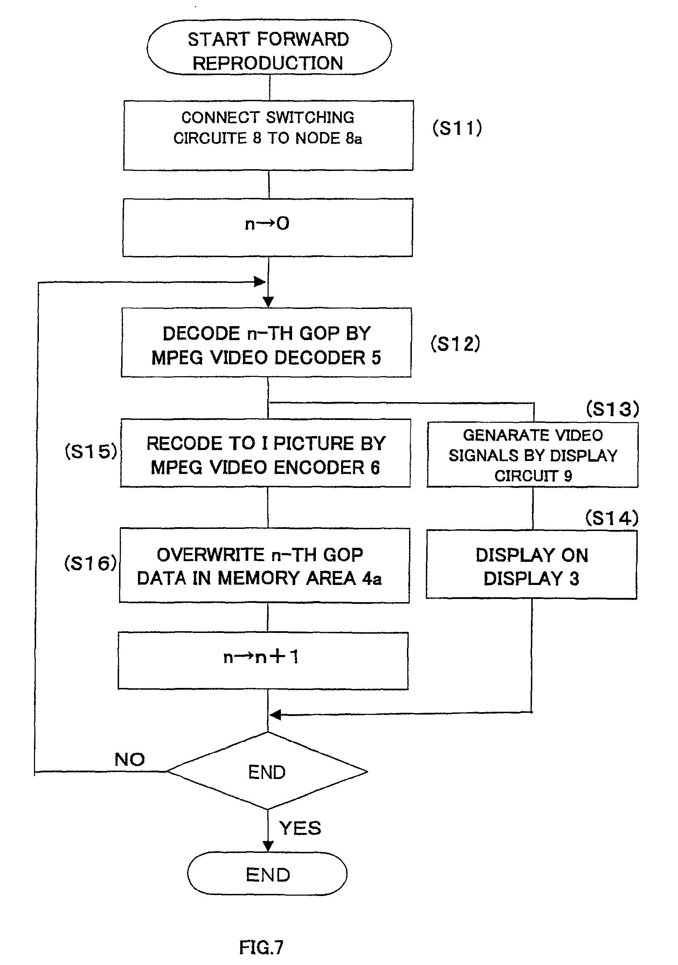

Next, an operation for forward reproduction will be explained, referring to the flowchart shown in Fig. 7. Forward reproduction is processed sequentially from GOP₀ along the time axis. The pictures within each GOP are, of course, decoded in the forward direction at the decoder 5. With forward reproduction instructed, the switching circuit 8 is connected to the first node 8a (S11), the MPEG video stream corresponding to GOP₀, is read out in units of picture from the hard disk 4 and inputted to the decoder 5, and the reproduced image data are generated, in units of picture, sequentially in a time series and inputted in parallel to the encoder 6 and the display circuit 9 (S12). The display circuit 9 generates video signals based on the inputted reproduced image data in units of picture so as to be outputted to the display 3 (S13), thereby the forward reproduced picture is displayed on the display 3 (S14).

On the other hand, the encoder 6, in parallel with a processing of the display circuit 9, recodes all of the reproduced image data sequence, for one GOP, inputted from the decoder 5, into I pictures (S15). The recoded data sequence is overwritten in the memory area 4a of the hard disk 4 (S16). Upon completion of the processing of GOP₀, the operation returns to S12 and the processing of the next GOP₁ is carried out. In other words, during forward reproduction, the encoder 6, in parallel therewith, recodes the same image data sequence sequentially in units of GOP into I pictures.

The image reproducing apparatus 1 provides the following operation and effects:
(1) Since the reproduced image data sequence generated by the decoder 5 is all converted into I pictures by the encoder 6 and reproduced in reverse order by the second decoder 7, smooth reverse-order reproduced picture can be obtained and as a result thereof an image search function of an apparatus equipped with the image reproducing apparatus 1 can be improved.
(2) Within the hard disk 4 which stores the MPEG video stream from the transfer medium 2, the memory area 4a is allocated to store the recoded data sequence from the encoder 6, so that a lower cost can be achieved than providing a separate storage element.
(3) The recoded data sequence, for one GOP, is overwritten sequentially in the memory area 4a, so that increase in its capacity can be suppressed and increase in the capacity of the hard disk 4 as a whole, too, can be suppressed.
(4) When the data sequence, for one GOP, is being decoded at the second decoder 7, the data sequence for the next GOP is being decoded at the decoder 5, so that the reverse reproduction of pictures for the next GOP can be started as soon as the reverse reproduction of pictures for one GOP is finished, thus making it possible to obtain smooth reverse-reproduced pictures.
(5) During a forward reproduction, the encoder 6, in parallel therewith, is recoding the same image data sequence sequentially in units of GOP into I pictures. Therefore, even when a reverse reproduction is instructed during the forward reproduction, the picture switching is carried out smoothly.

### (Second embodiment)

The second embodiment differs from the image reproducing apparatus 1 of the first embodiment in that high-speed forward reproduction and reverse reproduction are realized in the decoder 5 by putting the picture skip circuit 12 to effective use.

Since the frame rate of the MPEG video stream read out from the hard disk 4 rises with the reproducing speed, it is necessary to raise the processing speed of the decoder 5 if all the pictures are to be decoded at high-speed reproduction. To that end, however, it is necessary to raise the operating frequency, connect an arithmetic circuit in parallel, and/or improve the performance of memory, namely, the capacity and the operating speed. As a result thereof, there are caused problems where the circuit scale is increased and cost becomes higher together with increased power consumption.

In view of these problems, in the present embodiment, if a high-speed forward reproduction or high-speed reverse reproduction at, say, double speed is instructed, the control core circuit 10 transfers the pictures, as kept intact, to the decode core circuit 13 if the type of picture detected by the picture header detecting circuit 11 is an I picture or P picture; or if it is a B picture, it is skipped by connecting the picture skip circuit 12 to the second node 12b side. As a result, the pictures transferred to the decode core circuit 13 will be thinned out by as much as those skipped in units of picture. The degree of importance of the B picture, which is not used in the decoding of other pictures, is lower than that of the I picture or the P picture. Hence, skipping B pictures in preference to the others has an extremely small effect of lost frames on the moving pictures reproduced by the display 9 compared with skipping I pictures and P pictures. For this reason, smooth high-speed forward-reproduced and high-speed reverse-reproduced pictures can be obtained without raising the processing speed of the decoder 5. It is to be noted that in the present embodiment the basic operation of reverse reproduction follows the flow shown in Fig. 6, and that of forward reproduction the flow shown in Fig. 7.

### (Third embodiment)

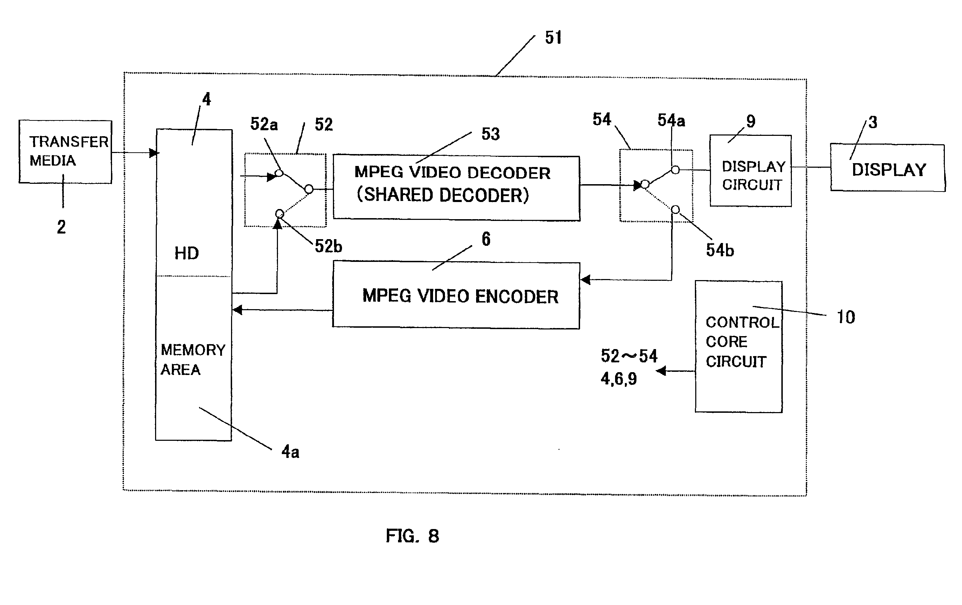

Fig. 8 shows a block circuit of an image reproducing apparatus 51 according to a third embodiment. The same reference numerals are used for the same component members as are in the first embodiment, and the detailed explanation thereof will be omitted here.

A feature of this embodiment lies in the fact that a decoder for the first picture data comprised of a plurality of pictures and a decoder for the second picture data comprised of a plurality of pictures, which appear at a different processing stage than the first picture data, are put to common use. In the first embodiment, it was explained that the structure of the second decoder 7 is similar to that of the decode core circuit 13 in the decoder 5, and in the present embodiment an attention is directed to this point, so that the decoder 5 and the second decoder 7 are put to common use. In Fig. 8, the image reproducing apparatus 51 comprises a hard disk 4, a switching circuit 52, a shared decoder 53, an encoder 6, a second switching circuit 54, a display circuit 9 and a control core circuit 10. The structure of the shared decoder 53 is the same as that of the decoder 5.

The MPEG video stream from the hard disk 4 or the recoded data sequence from the memory area 4a is inputted to the shared decoder 53 via the switching circuit 52, and an output thereof is inputted to the display circuit 9 or the encoder 6 via the second switching circuit 54.

The switching circuit 52 can switch its own connection to the first node 52a or the second node 52b side according to the control by the control core circuit 10. When the switching circuit 52 is connected to the first node 52a side, the MPEG video stream from the hard disk 4 is inputted to the shared decoder 53. When connected to the second node 52b side, the recoded data sequence from the memory area 4a is inputted to the shared decoder 53.

The second switching circuit 54 can switch its own connection to the first node 54a or the second node 54b side according to the control by the control core circuit 10. When the second switching circuit 54 is connected to the first node 54a side, the reproduced image data sequence from the shared decoder 53 is inputted to the display circuit 8. When connected to the second node 54b side, the reproduced image data sequence from the shared decoder 53 is inputted to the MPEG encoder 6.

By implementing the above-described structure, the switching circuit 52 is connected to the first node 52a and the second switching circuit 54 to the first node 54a when forward reproduction is performed. Thus, the MPEG video stream from the hard disk 4 is decoded by the shared decoder 53 and inputted, as it is, to the display circuit 9.

At the time of reverse reproduction, on the other hand, the control core circuit 10 first connects the switching circuit 52 to the first node 52a and the second switching circuit 54 to the second node 54b, and in this state the image data for one picture is read out from the hard disk 4. The image data are inputted to the shared decoder 53 through the first node 52a so as to be decoded. Then the reproduced image data for one picture from the shared decoder 53 are inputted to the MPEG encoder 6 via the second node 54b and recoded as an I picture.

The control core circuit 10, as soon as the reproduced image data for one picture are sent out from the shared decoder 53 to the MPEG encoder 6, switches the connection of the switching circuit 52 to the second node 52b and that of the second switching circuit 54 to the first node 54a and reads out the recoded data for one picture for reverse reproduction from the memory area 4a. The recoded data are inputted to the shared decoder 53 through the second node 52b and decoded, and the reproduced image data for one picture are inputted to the display circuit 8 via the first node 54a and displayed on the display 3. The control core circuit 10, as soon as the reproduced image data for one picture are sent out from the shared decoder 53 to the display circuit 8, switches the connection of the switching circuit 52 to the. first node 52a and that of the second switching circuit 54 to the second node 54b and reads out the image data for one picture from the hard disk 4.

Similarly in the following, the control core circuit 10, whenever the reproduced image data are outputted from the shared decoder 53, switches the node connection state of the switching circuits 52 and 54. The shared decoder 53 performs time-sharing processings of the decoder 5 and the second decoder 7 in the first embodiment. In the present embodiment, too, the basic operation of reverse reproduction follows the flow shown in Fig. 6, and that of forward reproduction the flow shown in Fig. 7. In Fig. 6, however, the operation of the decoder 5 and that of the second decoder 7 are replaced by the operation of the shared decoder 53.

As described in the first embodiment, since the picture skip circuit 12 is fixedly connected to the first node 12a in the decoder 5, no problem arises from putting the decoder 5 and the second decoder 7 to common use by adding the picture header detecting circuit 11 and the picture skip circuit 12 to the second decoder 7, namely, forming the shared decoder 53. In addition to the operation and effects of the first embodiment, the present embodiment realizes the effect of reducing circuit area and lower cost thereby, and furthermore, increasing commodity value is facilitated.

### (Fourth embodiment)

A fourth embodiment differs from the image reproducing apparatus 51 according to the third embodiment in that, in the shared decoder 53, high-speed forward reproduction and reverse reproduction are realized by putting the picture skip circuit 12 to effective use. The skip operation at the picture skip circuit 12 is the same as in the second embodiment. In this case, the data sequence generated by the MPEG encoder 6 is all I pictures, so that no skip occurs when this data sequence is inputted again to the shared decoder 53. In the present embodiment, too, the basic operation of reverse reproduction follows the flow shown in Fig. 6, and that of forward reproduction the flow shown in Fig. 7.

### (Fifth embodiment)

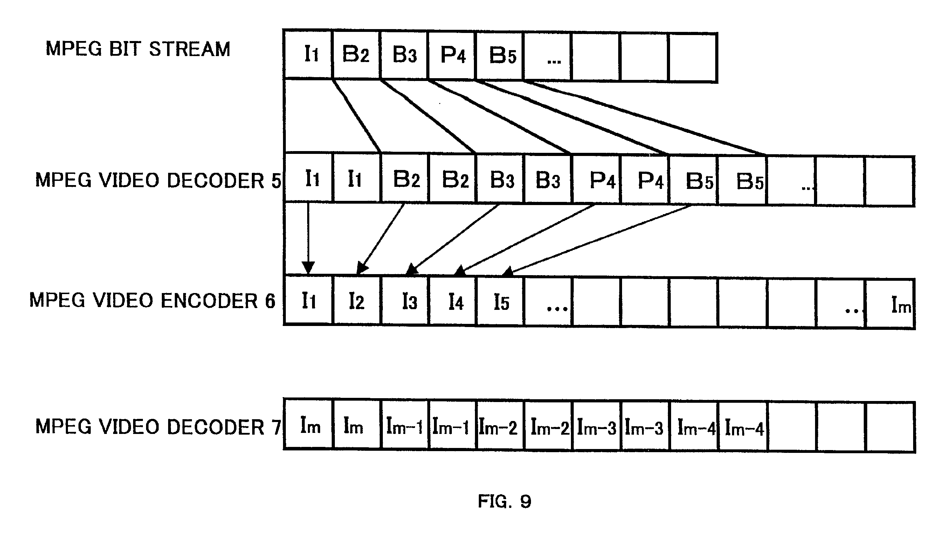

A fifth embodiment realizes low-speed forward reproduction and reverse reproduction in the image reproducing apparatus 1 of the first embodiment. In Fig. 9, the control core circuit 10 reads the MPEG bit stream from the hard disk 4 into the decoder 5 and has it make a repeated output of the same picture of the reproduced image data. For example, if the MPEG bit stream is arranged in the order of I₁B₂B₃P₄B₅ ..., then the reproduced image data sequence outputted from the decoder 5 will be I₁I₁B₂B₂B₃B₃P₄P₄B₅B₅ .... With this reproduced image data sequence inputted to the display circuit 9, the image speed on the display 3 becomes 1/2.

The decoder 5 has a built-in buffer memory, which is not shown. And the decoded picture data are stored temporarily in this buffer memory and the data are outputted a specified number of times (hereinafter referred to as "repeated output"). It is to be noted that the hard disk 4 or some other memory may serve as this buffer memory. The specified number of times may be determined based on the instructions of the user, may be set as a predetermined default value in the apparatus, or otherwise can be decided according to arbitrary design guidelines. Such guidelines will be valid thereafter.

With reverse reproduction instructed, the switching circuit 8 is connected to the second node 8b and the encoder 6 recodes the reproduced image data sequence inputted from the decoder 5 into I pictures. In this embodiment, however, the same data in the reproduced image data from the decoder 5 is inputted twice consecutively as described above, so that the only first reproduced image data is recoded into an I picture. That is, one GOP, which is comprised of m pictures, is decoded into 2m pictures by the decoder 5, and they are coded into m I pictures (I₁ to Iₘ) by the encoder 6. The second decoder 7 reads out the m I pictures (I₁ to Iₘ) stored in the memory area 4a in order from Iₘ by reversing along the time axis and decodes them sequentially. At this time, too, the control core circuit 10 outputs the decoded data by repeating it once. Then the data sequence decoded by the second decoder 7 becomes IₘIₘIₘ₋₁Iₘ₋₁Iₘ₋₂Iₘ₋₂ ... I₁I₁. And by inputting this reproduced image data sequence to the display circuit 9, the reverse-reproduced images can be displayed at 1/2 speed on the display 3.

The second decoder 7, too, has a built-in buffer memory, which is not shown. And the decoded picture data are stored temporarily in this buffer memory and the data are outputted repeatedly. The hard disk 4 or some other memory may also serve as this buffer memory. In the present embodiment, too, the basic operation of reverse reproduction follows the flow shown in Fig. 6, and that of forward reproduction the flow shown in Fig. 7.

It is to be noted that as a modification of the fifth embodiment, the shared decoder 53 may be so structured as to make a repeated output of the same picture in the image reproducing apparatus 51 of the third embodiment shown in Fig. 8. Thereby, the same operation and effects as those of the third embodiment can be provided.

In addition to the aforementioned embodiments, the present embodiment provides the following operation and effects:
(6) Low-speed reverse reproduction can be carried out, and the search function is further improved.
(7) Since the data sequence decoded into 2m pictures by the decoder 5 is coded into m I pictures by the encoder 6, the capacity of the memory area 4a remains no more than in the first embodiment. A low-speed and smooth reverse reproduction function can be added without any cost increase.

### (Sixth embodiment)

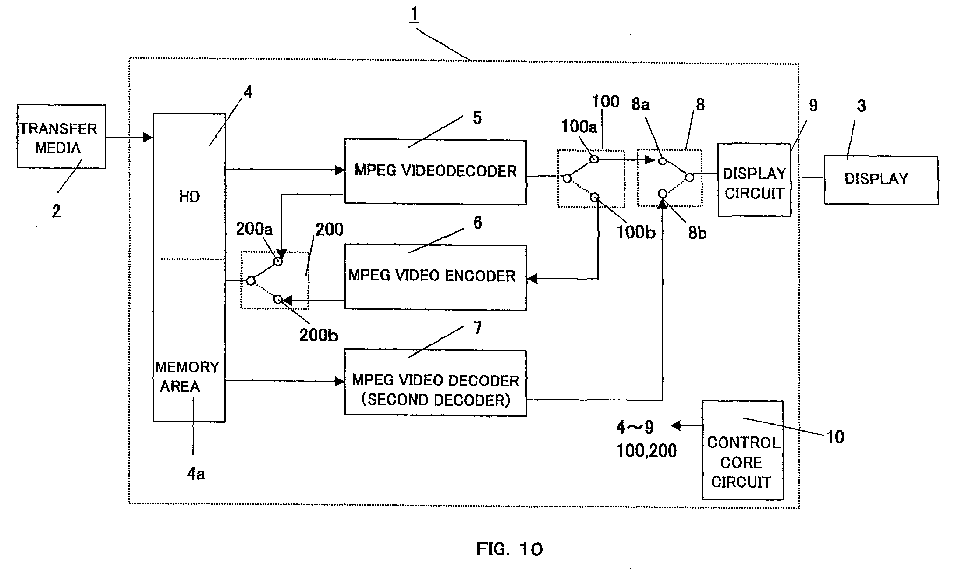

Fig. 10 shows a block circuit of the image reproducing apparatus 1 according to a sixth embodiment. While, in the first embodiment, the encoder 6 generates I pictures only for reverse reproduction, this embodiment aims to raise the efficiency of the processing. In Fig. 10, the same reference numerals are used for the same component members as are in Fig. 2, and explanation thereof will be omitted as appropriate. The new component members in Fig. 10 are the two switching circuits 100 and 200, which are referred to as the second switching circuit 100 and the third switching circuit 200, respectively, in distinction from the switching circuit 8 that has appeared in Fig. 2.

The second switching circuit 100 can switch its own connection to the first node 100a side or the second node 100b side according to the control by the control core circuit 10. When the second switching circuit 100 is connected to the first node 100a side, the reproduced image data generated by the decoder 5 are inputted, as kept intact, to the switching circuit 8. When connected to the second node 100b side, the reproduced image data generated by the decoder 5 are inputted to the encoder 6.

The third switching circuit 200 can switch its own connection to the first node 200a side or the second node 200b side according to the control by the control core circuit 10. When the third switching circuit 200 is connected to the first node 200a side, predetermined data in the MPEG video stream are stored in the memory area 4a allotted in the hard disk 4. When connected to the second node 200b side, the data generated by the encoder 6 are stored in the memory area 4a.

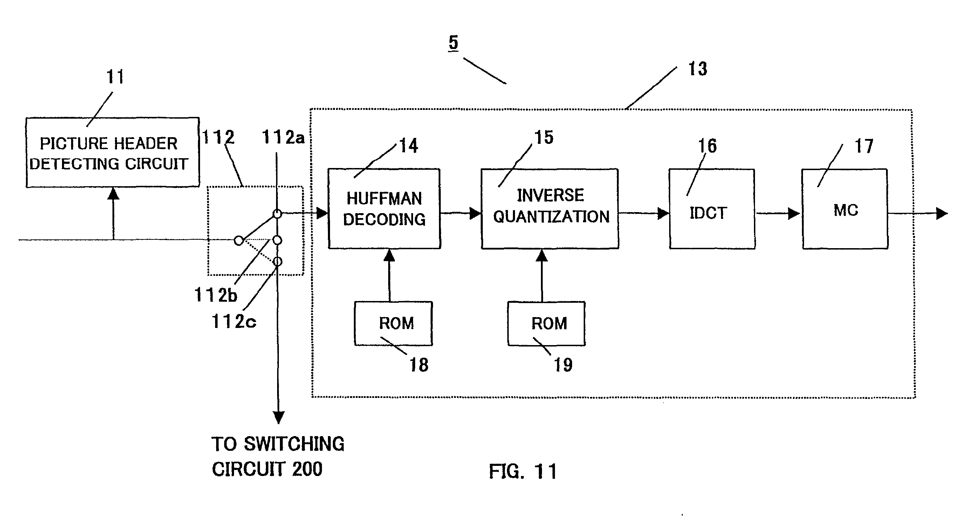

Fig. 11 is a block diagram showing a structure of the decoder 5. Different from Fig. 3, the picture skip circuit 12 is replaced by a picture switching circuit 112. The picture switching circuit 112 can switch its own connection to the first node 112a side, the second node 112b side or the third node 112c side according to the control by the control core circuit 10. And if the type of picture detected by the picture header detecting circuit 11 is an I picture, the picture will be transferred to the decode core circuit 13 and the third switching circuit 200, with the picture switching circuit connected to the second node 112b side which leads both ways; if the type of picture is a P picture, the picture will be transferred to the decode core circuit 13, with the circuit connected to the first node 112a side; and if the type of picture is a B picture, the picture will be transferred to the third switching circuit 200, with the circuit connected to the third node 112c side. It is to be noted that the picture switching circuit 112 and the third switching circuit 200 are an example of the "assignment processing unit" according to the present invention.

The internal structure of the encoder 6 and the decoder 5 according to this embodiment may be the same as that shown in Fig. 4 and Fig. 5, respectively. Hence, the MPEG video stream is first converted into a predetermined coded data sequence by the decoder 5 and the encoder 6, which is then sent through the third switching circuit 200 and stored in the memory area 4a allotted in the hard disk 4.

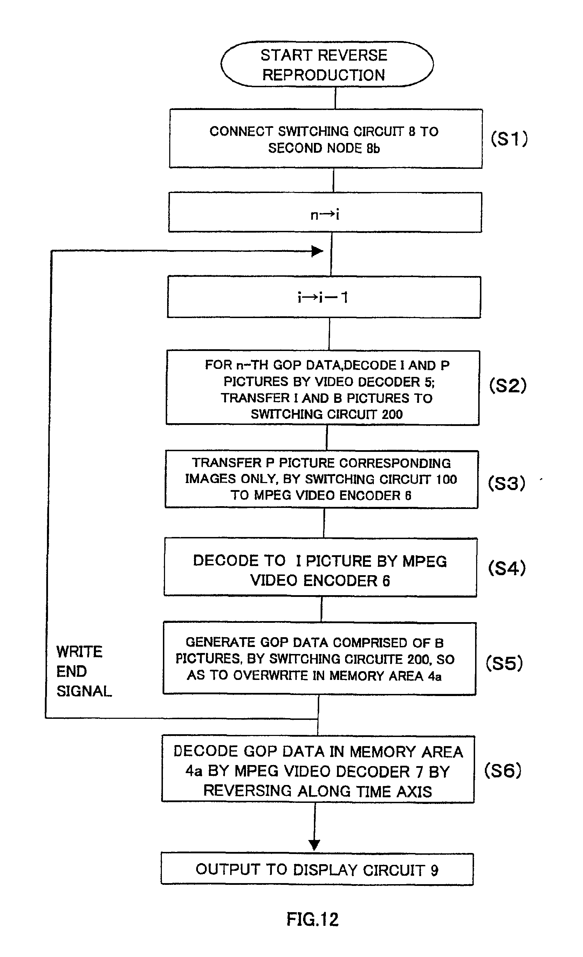

The operation of reverse reproduction according to the structure as described above is shown in a flowchart of Fig. 12. With a reverse reproduction instructed, the switching circuit 8 is connected to the second node 8b (S1). The MPEG video stream, which corresponds to GOPᵢ₋₁, is read out in units of picture from the hard disk 4 and inputted to the decoder 5. Then the type of each picture is determined to be any one of I, P or B by the picture header detecting circuit 11, and at the same time, with the operation of the picture switching circuit 112, the data of the I pictures and the P pictures are decoded by the decode core circuit 13, and the data of the I pictures and the B pictures are transferred to the third switching circuit 200 (S2).

Of the data decoded by the decode core circuit 13, the data produced by decoding the P picture data are inputted to the encoder 6 via the second node 100b of the second switching circuit 100 (S3). The data produced by decoding the I picture data are inputted to the switching circuit 8 via the first node 100a of the second switching circuit 100. At this time, however, the data are entirely discarded because the switching circuit 8 is connected to the second node 8b. That is, the data are put to use for the decoding of the P picture data. The encoder 6, according to the instructions from the control core circuit 10, recodes all the data inputted from the decoder 5, including those for P pictures, into I pictures (S4).

The third switching circuit 200, according to the control of the control core circuit 10, inputs the I picture and B picture data transferred from the picture switching circuit 112 as well as the recoded data from the encoder 6, which are the I picture data here, to the memory area 4a of the hard disk 4 in a time series manner. The data, for one GOP, inputted to the memory area 4a overwrites the old data (S5). In this manner, the coded data sequence inputted to the memory area 4a from the third switching circuit 200 consists only of I pictures and B pictures, and this coded data sequence is an example of the "second coded data sequence" in the present invention.

Upon completion of writing in the memory area 4a, the second decoder 7 reads out the recoded data stored in this memory area 4a in a reverse time-series manner, decodes them sequentially and outputs them to the display circuit 9 (S6). As described above, I pictures and B pictures are included in the recoded data sequence, for one GOP, from the encoder 6. Therefore, in order to read out back along the time axis and decode sequentially the recoded data sequence stored in the memory area 4a, the B pictures are decoded by first performing a processing which exchanges the forward reference area and the backward reference area relative to the input order of the stream and thereafter carrying out the decoding.

With the end of writing in the memory area 4a in S5, a write end signal is sent out, the MPEG video stream, which corresponds to a next GOPᵢ₋₂, is inputted to the encoder 5, and the processing from S2 as described above is performed. Namely, in S6, while the data, for one GOP, is being decoded at the second decoder 7, the data, for the next GOP, is being decoded at the decoder 5.

In addition to the aforementioned embodiments, the image reproducing apparatus 1 according to this embodiment provides the following effects:
(8) Of the MPEG video stream, the data corresponding to I pictures and B pictures are not transferred to the encoder 6, so that there is a reduction in the amount of data to be transferred from the decoder 5 to the encoder 6 and besides the processing burden on the encoder 6 is lightened. As a result, the encoder 6 to be used can be of a low power consumption and small circuit area type.
(9) Of the MPEG video stream, the B pictures are stored as the B picture data, as they are, in the memory area 4a, so that the capacity of the memory area 4a can be made smaller than that according to the first embodiment, which, in turn, can contribute in making the image reproducing apparatus 1 smaller and of lower cost.

### (Seventh embodiment)

The seventh embodiment is a further compact design version of the sixth embodiment, and their relationship is the same as that of the second embodiment to the first embodiment. Hereinbelow, the same reference numerals are used for the same component members as are in the sixth embodiment, and the detailed explanation thereof will be omitted.

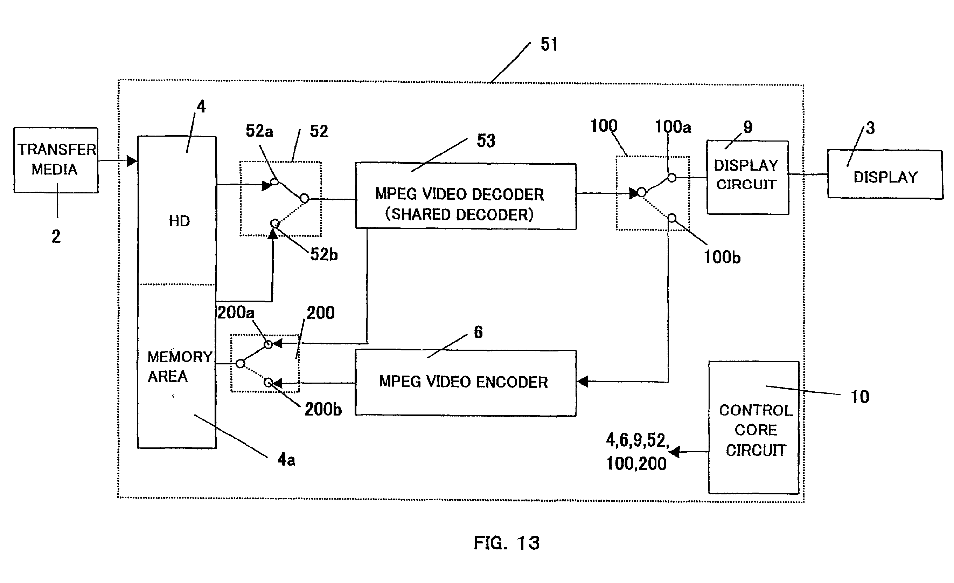

Fig. 13 shows a block circuit of an image reproducing apparatus 51 according to this embodiment. As shown in the same figure, the decode core circuit 13 of the decoder 5 and the second decoder 7 are put to common use. The image reproducing apparatus 51 comprises a hard disk 4, a switching circuit 52, a shared decoder 53, an encoder 6, a second switching circuit 100, a third switching circuit 200, a display circuit 9 and a control core circuit 10. The structure of the shared decoder 53 is the same as that of the decoder 5.

In the image reproducing apparatus 51, the MPEG video stream from the hard disk 4 or the recoded data from the memory area 4a are inputted to the shared decoder 53 via the switching circuit 52, and the output thereof is inputted to the display circuit 9 or the encoder 6 via the second switching circuit 54.

When the switching circuit 52 is connected to the first node 52a side, the MPEG video stream from the hard disk 4 is inputted to the shared decoder 53. When connected to the second node 52b side, the recoded data from the memory area 4a are inputted to the shared decoder 53. When the switching circuit 52 is connected to the second node 52b side, the picture switching circuit 112 is connected to the first node 112a irrespective of the type of picture.

Based on the above-described structure, the switching circuit 52 is connected to the first node 52a and the second switching circuit 100 to the first node 100a when forward reproduction is performed. Thus, the MPEG video stream from the hard disk 4 is decoded by the shared decoder 53 and inputted, as it is, to the display circuit 9.

At the time of reverse reproduction, on the other hand, the control core circuit 10 first connects the switching circuit 52 to the first node 52a and the second switching circuit 100 to the second node 100b, and in this state the image data for one picture are read out from the hard disk 4. The image data are inputted to the switching circuit 12 of the shared decoder 53 through the first node 52a and then, according to the type of picture, inputted to the decode core circuit 13 or the third switching circuit 200.

The control core circuit 10, as soon as the reproduced image data for one picture are sent out from the shared decoder 53 to the third switching circuit 200 or the MPEG encoder 6, switches the connection of the switching circuit 52 to the second node 52b and that of the second switching circuit 100 to the first node 100a and reads out the recoded data for one picture for reverse reproduction from the memory area 4a. The recoded data are inputted to the shared decoder 53 through the second node 52b and decoded. The decoded data are inputted to the display circuit 9 via the first node 100a and displayed on the display 3.

The control core circuit 10, as soon as the reproduced image data for one picture are sent out from the shared decoder 53 to the display circuit 9, switches the connection of the switching circuit 52 to the first node 52a and that of the second switching circuit 100 to the second node 100b and reads out the image data for one picture from the hard disk 4.

Similarly in the following, the control core circuit 10, whenever the reproduced image data are outputted from the shared decoder 53, switches the node connection state of the switching circuits 52 and 100. By so doing, the shared decoder 53 performs time-sharing processings of the decoder 5 and the second decoder 7 in the sixth embodiment.

The basic operation of reverse reproduction in the present embodiment follows the flow shown in Fig. 12. In Fig. 12, however, the operation of the decoder 5 and that of the second decoder 7 are replaced by the operation of the shared decoder 53. In addition to the operation and effects of the sixth embodiment, this embodiment realizes the reduction in circuit area by putting the decoder 5 and the second decoder 7 to common use.

### (Eighth embodiment)

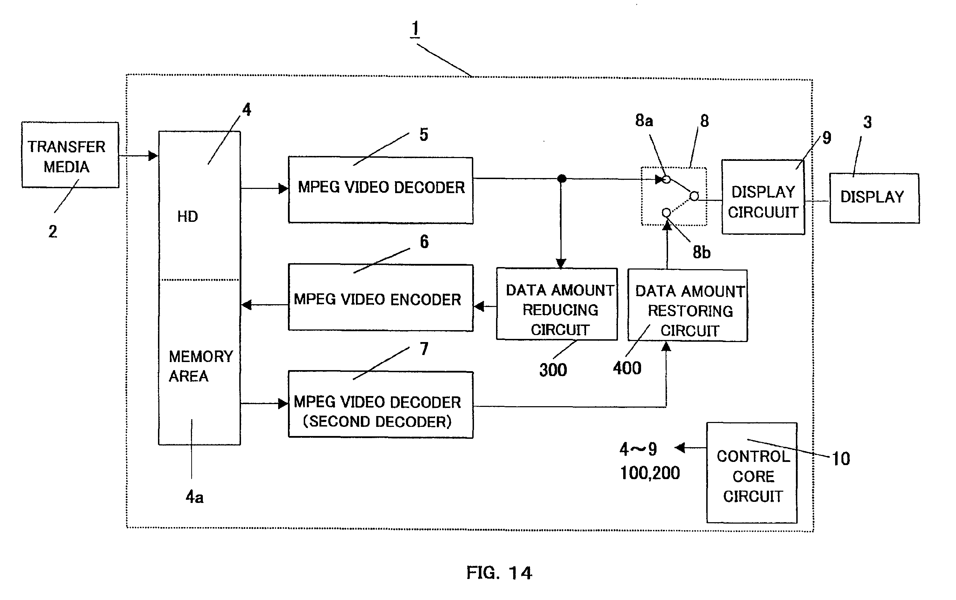

Fig. 14 shows a block circuit of an image reproducing apparatus 1 according to an eighth embodiment. In the same figure, the same reference numerals are given to the same component members as are in Fig. 2, and explanation thereof will be omitted as appropriate. New component members in Fig. 14 are a data amount reducing circuit 300 and a data amount restoring circuit 400. The former is provided on the route from the decoder 5 to the encoder 6, and the latter on the route from the second decoder 7 to the switching circuit 8.

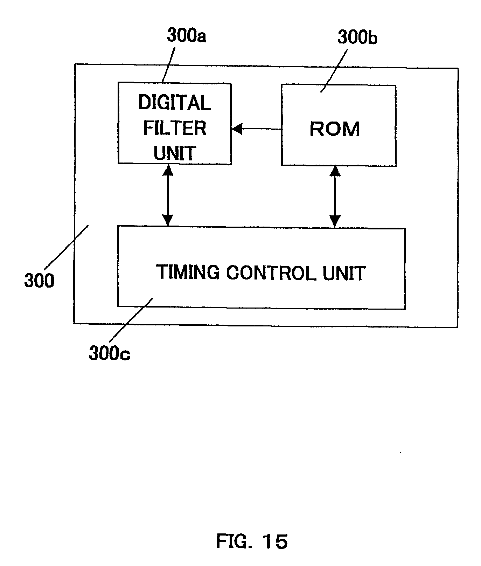

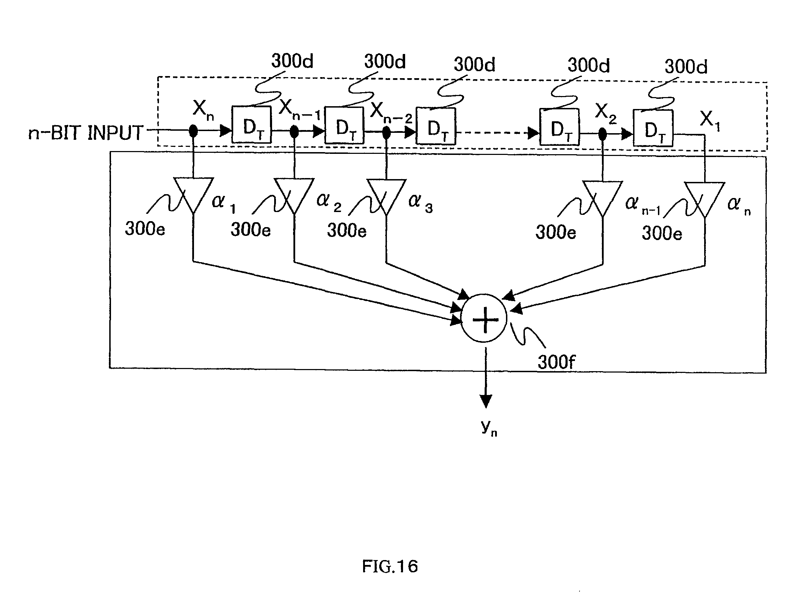

Fig. 15 is a block diagram showing a structure of the data amount reducing circuit 300. The data amount reducing circuit 300 comprises a digital filter unit 300a, a ROM 300b and a timing control unit 300c. The digital filter unit 300c is comprised of an FIR filter and is, as shown in Fig. 16, comprised of n units of delay elements 300d..., which delay n bits of input signal inputted via the second node 8b of the switching circuit 8 for every sampling cycle, n+1 units of multipliers 300e..., and an adder 300f which convolutes signals from the multipliers 300e.... The respective coefficients αₙ, αₙ₋₁ ... ... α₂, α₁ of the multipliers 300e..., which are the coefficients that determine the characteristics of the filter, are written in advance in the ROM 300b. The coefficients stored in the ROM 300b are in advance set to proper values through simulation at a manufacturing stage.

According to this embodiment, satisfactory low-resolution images are achieved by changing the value of each coefficient for every sampling cycle by the use of the concepts of linear interpolation and others in order to reduce the number of pixels of each picture, for instance, 1080 (vertical) × 1920 (horizontal) of original image data, generated by the decoder 5.

As an example, let us consider the case of reducing the horizontal number of pixels to 2/3. Suppose that there are three pixels p₁ to p₃ placed side by side horizontally in an original image. Now these pixels are converted into two pixels q₁ and q₂ by the data amount reducing processing. To accomplish this, q₁ and q₂ are each expressed as primary linear sum of p₁, p₂ and p₃. Namely, a data amount reduction is realized by determining each coefficient of the linear sums by experiment or like means upon deciding on the ratio, or the actual number, of pixels to be reduced. As an application of MPEG, the number of pixels in each picture may be reduced to, for example, 480 (vertical) × 720 (horizontal).

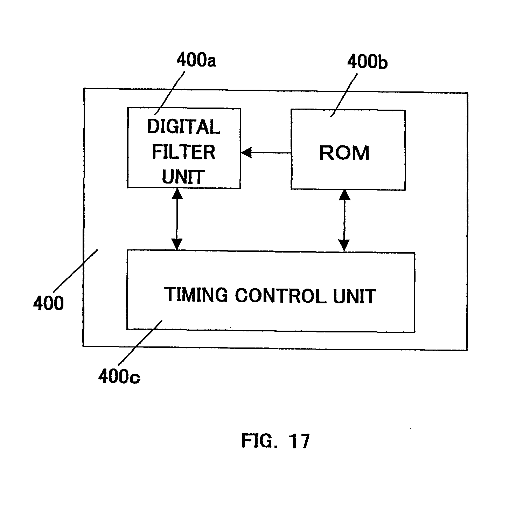

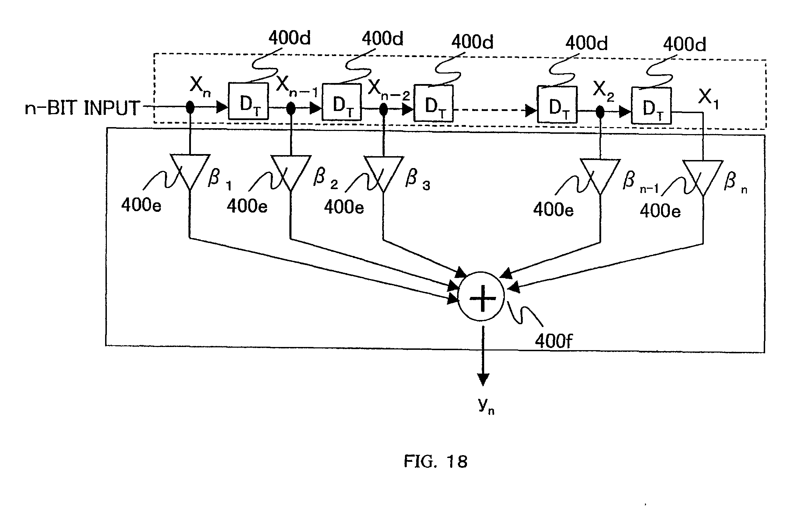

Fig. 17 is a block diagram showing a structure of the data amount restoring circuit 400. The data amount restoring circuit 400 comprises a digital filter unit 400a, a ROM 400b and a timing control unit 400c. Similar to the digital filter unit 300c, the digital filter unit 400c is comprised of an FIR filter and is, as shown in Fig. 18, comprised of n units of delay elements 400d..., which delay n bits of input signal generated by the second decoder 7 for every sampling cycle, n+1 units of multipliers 400e..., and an adder 400f which convolutes signals from the multipliers 400e.... The respective coefficients βₙ, βₙ₋₁, ... β₂, β₁ of the multipliers 400e..., which are the coefficients that determine the characteristics of the filter, are written in advance in the ROM 400b. The coefficients stored in the ROM 400b are in advance set to proper values through simulation at a manufacturing stage.

In order to restore each image generated by the second decoder 7, or the number of pixels of image data, for instance, 480 (vertical) × 720 (horizontal), to each image generated by the decoder 5, or the number of pixels of original image data, for instance, 1080 (vertical) × 1920 (horizontal), the data amount restoring circuit 400 changes the value of each coefficient for every sampling cycle and performs a processing which is equivalent to the inverse transformation of the data amount reduction processing described above.

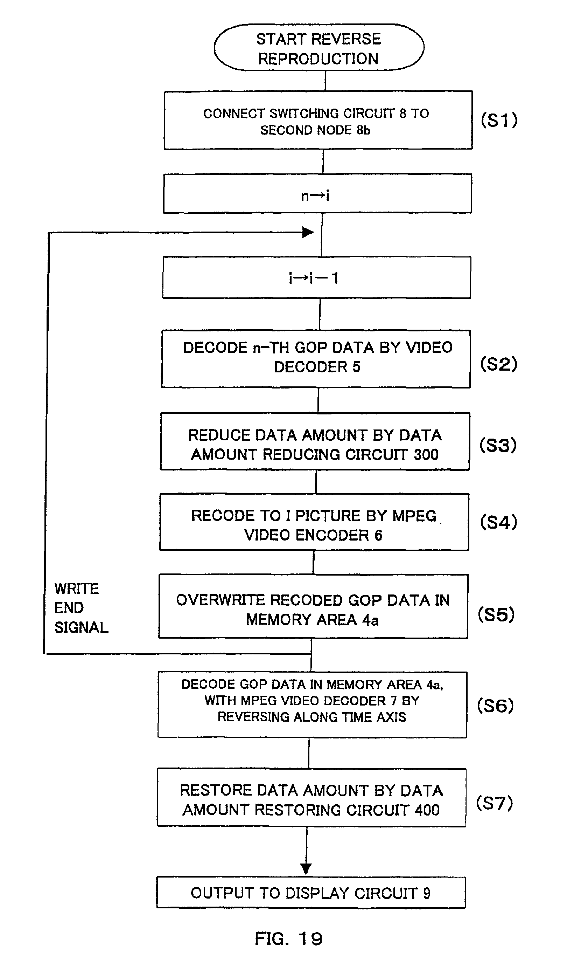

The operation of reverse reproduction based on the above-described structure is shown in the flowchart of Fig. 19. With a reverse reproduction instructed, the switching circuit 8 is connected to the second node 8b (S1). The MPEG video stream, which corresponds to GOPᵢ₋₁, is read out in units of picture from the hard disk 4 and inputted to the decoder 5. Then the reproduced image data of each picture are generated sequentially into a time series and inputted to the data amount reducing circuit 300 (S2). After reducing the number of pixels of the original image data of each picture to 480 (vertical) × 720 (horizontal), the data amount reducing circuit 300 inputs the reproduced image data to the encoder 6 (S3). The encoder 6 recodes all the reproduced image data for one GOP inputted from the decoder 5 into I pictures (S4). The recoded data for one GOP from the encoder 6 are overwritten in the memory area 4a of the hard disk 4 (S5).

Upon completion of writing in the memory area 4a, the second decoder 7 reads out the recoded data stored in this memory area 4a in a reverse time-series manner, decodes them sequentially and outputs them to the data amount restoring circuit 400. With the end of writing in the memory area 4a, a write end signal is sent out, the MPEG video stream, which corresponds to the next GOPᵢ₋₂, is inputted to the encoder 5, and the processing from S2 as described above is performed (S6). Namely, in S6, while the data for one GOP is being decoded at the second decoder 7, the data for the next GOP is being decoded at the decoder 5.

The data amount restoring circuit 400 restores the number of pixels of the image data of each picture generated by the second decoder 7 to the original 1080 (vertical) × 1920 (horizontal), and thereafter the switching circuit 8 inputs the restored image to the display circuit 9 via the second node 8b. This way, the reverse-reproduced picture is displayed on the display 3.

In addition to the aforementioned embodiments, the image reproducing apparatus 1 according to this embodiment provides the following operation and effects:
(10) Thanks to the operation of the data amount reducing circuit 300, the capacity of the memory area 4a can be made smaller than when all the MPEG video stream is turned into I pictures by the encoder 6 for storage, thus making it possible to make the image reproducing apparatus 1 smaller and of lower cost.
(11) The display image quality can be nearly maintained because the image data are transferred to the display circuit 9 after restoring the once reduced number of pixels by the data amount restoring circuit 400.

Also, it goes without saying that the skip operation may be added to this embodiment just as in the second embodiment, in which the picture skip operation is added to the first embodiment. In this embodiment, the data amount is thinned out in units of picture or frame, but the same may be achieved in units of field. In the case of an interlace drive, thinning out in units of even or odd field is also effective.

### (Ninth embodiment)

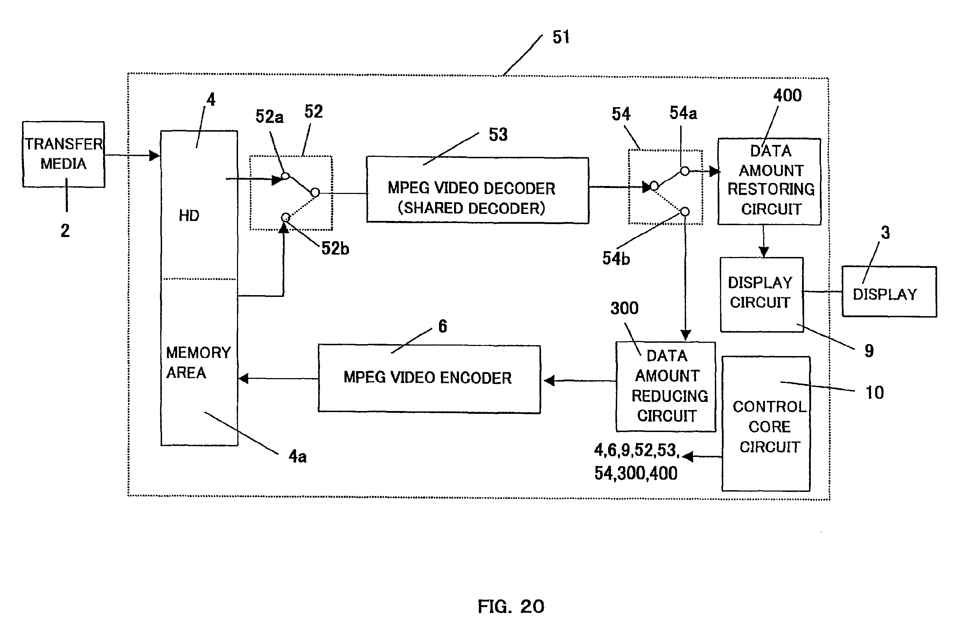

Fig. 20 shows a block circuit of an image reproducing apparatus 51 according to a ninth embodiment. The same reference numerals are given to the same component members as are in the eighth embodiment, and the detailed explanation thereof will be omitted here. Fig. 20 differs from Fig. 14 in that the data amount reducing circuit 300 and the data amount restoring circuit 400 are present additionally. The structure of a shared decoder 53 is the same as that of the decoder 5.

A second switching circuit 54 switches its own connection to a first node 54a side or a second node 54b side according to the control by the control core circuit 10. And when the second switching circuit 54 is connected to the first node 54a side, reproduced image data from the shared decoder 53 are inputted to the data amount restoring circuit 400 whereas when connected to the second node 54b side, the reproduced image data from the shared decoder 53 are inputted to the data amount reducing circuit 300.

Based on the above-described structure, the switching circuit 52 is connected to the first node 52a and the second switching circuit 54 to the first node 54a when forward reproduction is performed. Thus, the MPEG video stream from the hard disk 4 is decoded by the shared decoder 53 and inputted, as it is, to the display circuit 9. In forward reproduction, the data amount restoring circuit 400 does not operate and the image data, kept intact, from the shared decoder 53 are sent to the display circuit 9.

At the time of reverse reproduction, on the other hand, the control core circuit 10 first connects the switching circuit 52 to the first node 52a and the second switching circuit 54 to the second node 54b, and in this state the image data for one picture is read out from the hard disk 4. The image data are inputted to the shared decoder 53 through the first node 52a and decoded. After the decoded data are sent through the second node 54b and processed by the data amount reducing circuit 300, they are inputted to the MPEG encoder 6 so as to be recoded as I pictures.

As soon as the reproduced image data for one picture are sent out from the shared decoder 53 to the MPEG encoder 6, the control core circuit 10 switches the connection of the switching circuit 52 to the second node 52b and that of the second switching circuit 54 to the first node 54a and reads out the recoded data for one picture for reverse reproduction from the memory area 4a. The recoded data are inputted to the shared decoder 53 through the second node 52b and decoded. After the decoded data are sent through the first node 54a and restored by the data amount restoring circuit 400, they are inputted to the display circuit 9 and displayed on the display 3. As soon as the reproduced image data for one picture are sent out from the shared decoder 53 to the display circuit 8, the control core circuit 10 switches the connection of the switching circuit 52 to the first node 52a and that of the second switching circuit 54 to the second node 54b and reads out the image data for one picture from the hard disk 4.

The processings, operations and effects according to this embodiment are the same as those according to the third embodiment. In this embodiment, however, the effect of the data amount reduction processing is present additionally. Moreover, it goes without saying that as in the fourth embodiment, the picture skip function can be added to this embodiment.

### (Tenth embodiment)

The tenth embodiment realizes low-speed forward reproduction and reverse reproduction with the image reproducing apparatus 1 according to the eighth embodiment. Namely, as explained with the structure of Fig. 14 in the fifth embodiment, the reproduced image data are outputted from the decoder 5 by repeating the same picture once. Accordingly, this embodiment can have the combined effects of the eighth embodiment and the data amount reduction.

As a modification of this embodiment, the image reproducing apparatus 51 according to the ninth embodiment may be so arranged that the shared decoder 53 outputs the same picture repeatedly. Thereby, the same effects as in the ninth embodiment can be obtained.

### (Eleventh embodiment)

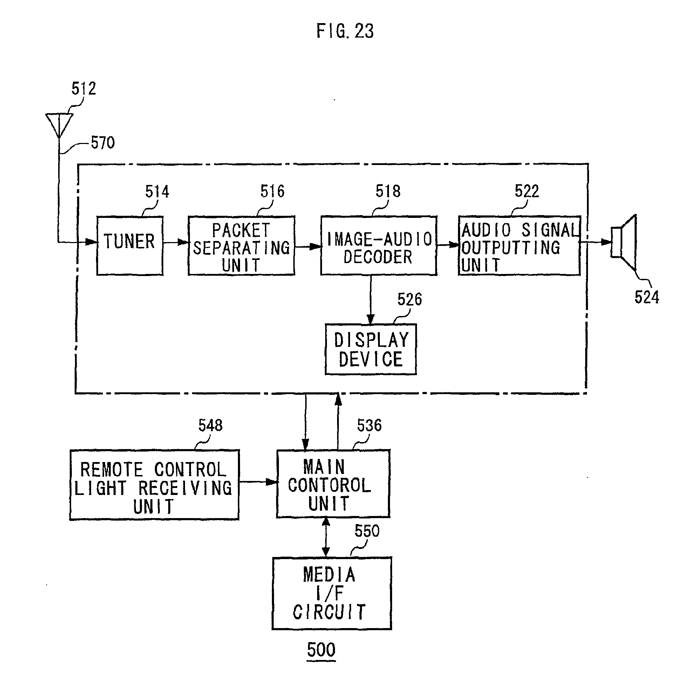

The eleventh embodiment relates to a case in which the image reproducing apparatus or the image processing apparatus according to any of the above-described embodiments is incorporated into a television receiver. Fig. 23 is its structural diagram.

In a television receiver 500, broadcast waves 570 are provided to a tuner 514 via an antenna 512. The tuner 514 selects a transponder including a channel selected by a user and performs QPSK demodulation thereon. A stream containing a plurality of transport pockets obtained by the demodulation is sent to a packet separating unit 516. The packet separating unit 516, which is a demultiplexer, separates packets corresponding to the desired channel and outputs them to an image-audio decoder 518.

The image-audio decoder 518, which is an MPEG decoder, incorporates the image reproducing apparatus or the image processing apparatus according to any of the above-described embodiments for its image processing. The image-audio decoder 518 decodes the inputted packets and outputs audio data to an audio signal outputting unit 522 and image data to a display device 526. The audio signal outputting unit 522 carries out a predetermined processing on the inputted audio data, and the audio is finally outputted to a speaker 524.

A main control unit 536, which is comprised of a control core circuit 10, a CPU and so forth, performs an overall and supervised control of each part according to instructions from the user. The instructions from the user are inputted via a remote control light receiving unit 548, which receives signals from, for example, a remote controller which is not shown here. A media I/F circuit 550 reads multimedia data or programs from an IC card, MO, CD-ROM, DVD-ROM or other record media, which are not shown here, into the main control unit 536.

By the structure as described above, image reproduction processings, including forward reproduction and reverse reproduction, are realized according to the instructions from the user. Then, the operation and effects described above can be provided.

### (General examination on the embodiments)

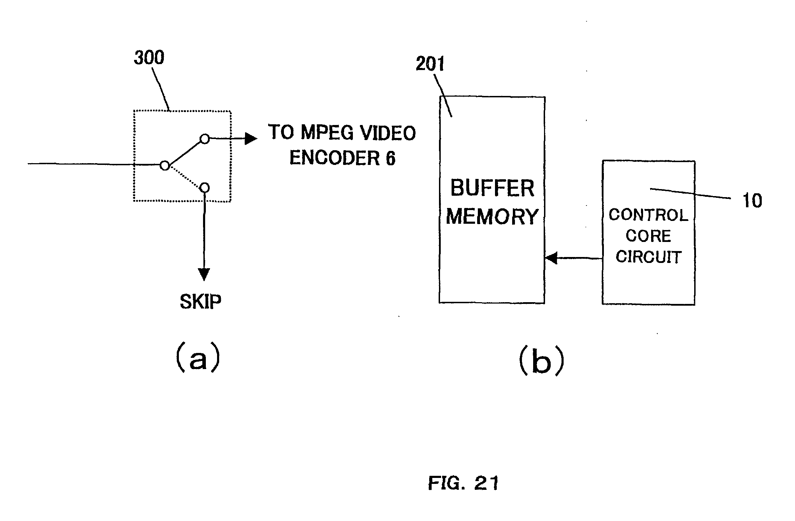

As is naturally understood by those skilled in the art, arbitrary combinations of the embodiments, which have not been described herein, are possible. For example, in any case, a skip processing unit, which thins out the inputted first coded data sequence in units of picture, for instance, a picture skipping circuit 12, may be provided. In this case, the first decoder decodes the data sequence after the thinning-out and generates a continuous image data sequence in a time-series manner. A discriminating unit, which determines the types of pictures contained in the inputted first coded data sequence, for instance, a picture header detecting unit 11, may be further provided. In this case, B pictures may be thinned out, in preference to the other types, by a skip processing unit. Moreover, the following consideration or modifications are possible:
(a) In some of the embodiments, the encoder 6 does not require the MC circuit 20. In such a case, the algorithm of still picture compression can be applied, so that a JPEG (Joint Photographic Coding Expert Group) encoder is used in place of the encoder 6. The image data coded by this JPEG encoder are also intra-frame coded images.
   Also, in addition to JPEG, compression technology using the difference-processing-based difference YUV, the block-based Hadamard transform, the Slant transform or the Haar transform method may be used for the compression of still picture data. It is to be noted that when the above-described still picture compression technology is used for the encoder 6, it is necessary to use a similar still picture expansion technology for the second decoder 7.
(b) Similarly, in some of the embodiments, the second decoder 7 does not require the MC circuit 29. Therefore, as in (a), a JPEG decoder is used. For the decoding of intra-frame coded images, a method such as the above-described difference YUV, Hadamard transform and so forth may be used.
(c) As the hard disk 4, a magneto-optical disk, optical disk or the like is used in place of a magnetic disk.
(d) As the hard disk 4, a rewritable semiconductor memory, such as SDRAM (Synchronous Dynamic RAM), DRAM or Rambus DRAM, is used.
(e) A hard disk 4 and a memory area 4a are provided independently. In this case, the memory area 4a is preferably a rewritable semiconductor memory.
(f) When emphasis is placed on the reduction of circuit area, the picture skip circuit 12 of the decoder 5 is omitted. In this case, the picture header detecting circuit 11 may further be omitted.
(g) From the MPEG video stream, the data sequence is taken out not in one GOP but in the following units. The following units, including GOP, are included in the concept of units of group.
   · Units starting from an I picture are not taken as GOP, but the units starting from, for example, a P picture are to be taken as GOP.
   · Without adhering to the concept of GOP, groups of several pictures are to be units of group.
   · The number of pictures is arbitrarily changed group by group.
(h) RAM (Random Access Memory) is used in place of ROM's 18, 19, 24, 25, 30 and 31.
(i) As a modification of the fifth embodiment, the processings at the decoder 5 and the encoder 6 in reverse reproduction are to remain the same as in the first embodiment, and the repeated output of each picture is done only at the second decoder 7. By this, power consumption at the decoder 5 can be reduced.
(j) In the fifth embodiment and in (i) above, the number of repeated outputs of the same picture at the decoder 5 and the second decoder 7 is set at twice or more. Thereby, further low-speed reverse-reproduced images can be obtained.
(k) In the fifth embodiment, the structure is such that the decoded data are outputted repeatedly at the decoder 5 and the second decoder 7. However, if there are any merits in circuit control or in timing control, the same picture may be decoded repeatedly so as to be outputted.
(l) In the reverse reproduction in each of the embodiments, the I picture data in the MPEG video stream stored in the hard disk 4 are transferred, as they are, to the memory area 4a, without the processings at the decoder 5 and the encoder 6. Thereby, power consumption at the decoder 5 and the encoder 6 can be reduced.
(m) In addition to (1) above, in reverse reproduction, the B picture data are transferred, as they are, to the memory area 4a, without the processings at the decoder 5 and the encoder 6. Thereby, power consumption at the decoder 5 and the encoder 6 can be reduced. Moreover, since all the data are not recoded into I pictures, the capacity of the memory area 4a can be reduced. In this case, however, a front reference region and a back reference region of the B picture read out from the memory area 4a are exchanged relative to the order of the stream and decoded at the second decoder 7.
(n) The low-speed reverse reproduction function explained in the fifth embodiment, the normal-speed reverse reproduction function explained in the first and third embodiments, and the high-speed reverse reproduction function explained in the second and fourth embodiments are mounted on a single image reproducing apparatus, and an operation key to select these functions is provided.
(o) Reverse reproduction is carried out frame by frame according to the key operation.
(p) In addition to the above-described embodiments, there are the following modes as applications in which two coding or decoding functions are provided within an apparatus. Thus, though in the aforementioned third embodiment an example was described in which the decoder 5 and the second decoder 7 are put to common use as the shared decoder 53, these encoders may be put to common use in a case where there are two encoders provided.
   (i) A case where in a movie camera a subject is shot simultaneously from different angles and the data are compressed-expanded in an MPEG system.
   (ii) A case where in television a plurality of programs are decoded simultaneously and are two-screen displayed.
   (iii) A case where in television a plurality of programs are decoded simultaneously and channel switching is made seamlessly. In the broadcast using MPEG, once the decoding is interrupted for channel switching and the like, a little time, or a period of 0.5 to 2 seconds before a new sequence header is detected, is necessary before the decoding is resumed next. Normally, during this period, the picture freezes or suffers a blackout. (iii) is effective in solving this problem.
   (iv) In a television connected with a DVD, digital still camera or the like, the broadcast together with the DVD and digital still camera are reproduced simultaneously.
   (v) A case in which, during the reproduction of a program, the program or another program on a different channel is recorded in the state of a moving picture or still picture, and at the same time the recorded moving picture or still picture and the program being broadcast are superimposed and reproduced simultaneously.
   (vi) A case in which reproduced images are coded in a JPEG system at certain time intervals and taken into a ring buffer, so that these can be used as an index for a jump to a near scene in a reverse search.
(q) The data amount reducing circuit 300 may be so structured that frames are thinned out instead of reducing the number of pixels. In this case, the data amount reducing circuit 300, as shown in Fig. 21 (a), skips the original image data of each picture generated by the decoder 5 or the shared decoder 53, in units of frame, by switching the nodes of the data amount reducing circuit 300. For example, switching the nodes in an alternate manner for every frame can reduce the number of frames to 1/2, and skipping two out of three frames can reduce the number of frames to 1/3.
   When the data amount reducing circuit 300 is structured as shown in Fig. 21 (a), the data amount restoring circuit 400, as shown in Fig. 21 (b), is comprised of a buffer memory 201 which stores the image data of each picture generated by the second decoder 7 or the shared decoder 53, and a control core circuit 10 which controls the buffer memory, and makes repeated outputs of the image data, from the buffer memory 201, equivalent to what has been skipped by the data amount reducing circuit 300.
   In this case, it is to be noted, the data amount of the image data generated by the data amount restoring circuit 400 is not the same as the data amount of the image data before the reduction by the data amount reducing circuit 300. Yet, getting the data amount of the image data of each picture generated by the second decoder 7 or the shared decoder 53 near or above the data amount of image data before the reduction can also be referred to as "restoring substantially."
(r) For reverse reproduction, it was necessary that the image data for one GOP be held, just as they are, in the memory area 4a. This is because the data within a GOP are read out only in the forward direction and thus, without all the data for one GOP remaining, the pictures can not be generated in reverse reproduction. For this reason, it is required that the memory area 4a shall have a capacity for recording the image data for one GOP. Such a structure, however, is put to effective use, so that in the first embodiment and others the encoder 6 is made to run free even during forward reproduction so as to constantly generate and maintain the data for reverse reproduction for one GOP. This arrangement is intended to effect smooth switching from forward to reverse reproduction.
   Though this method realizes smoother switching of reproduction directions than when there is no free run of the encoder 6, it is not necessarily without a time lag at the switching. This is because when a reverse reproduction is being performed for GOPₙ, the decoder 5 needs to read out and decode the coded data for one GOP for the preceding GOPₙ₋₁ and therefore there are possibilities that a series of processings might not be finished before the completion of reverse reproduction of GOPₙ. Should it not be finished, the reverse reproduction will come to a stop momentarily.
   As a countermeasure to this, the time lag at the switching from forward reproduction to reverse reproduction can be eliminated completely by expanding the storage of the image data for one GOP as described in the first embodiment and others and thus by storing the image data for a maximum of about two GOPs. Accordingly, it suffices to take this countermeasure in a case where such specifications are required.
   Then, however, it is of course necessary to increase the memory capacity. When all the I pictures are recoded by the encoder 6, various intra-frame compression processings, such as generating I pictures skippingly at every 2 or 3 pictures or reducing the number of pixels, can be added to suppress the memory capacity for storage of these I pictures.
   First, when the I pictures are generated skippingly and stored, it suffices that as for skipped pictures the reproduced I pictures are displayed again prior to that. For example, when every other I picture is skipped, the speed of reverse reproduction can be maintained the same as the speed of forward reproduction by displaying every I picture twice. Conversely from this, reproduction of alternately stored I pictures, as they are, will automatically realize a double-speed reverse reproduction, which may, of course, be considered a part of the product specifications.
   When the number of pixels is to be reduced, decoding in a down conversion format may be carried out beforehand by the IDCT processing at the decoder 7. Namely, while under the normal circumstances the IDCT processing is performed on the square block of, for example, 8×8 pixels, the IDCT may be performed on the 1/2 size block of 8×4 pixels. In that case, since the capacity of the image data to be stored in a frame memory in image reproduction becomes 1/2, the thus emptied area can be used to store the I pictures for the above-described two GOPs. With this down conversion performed, however, the images of 1960×1080 pixels in high-definition mode will become those of 980×1080 pixels. Hence, in their reproduction, some resolution restoration processing, such as displaying each pixel twice horizontally, is to be carried out.
(s) The above-described time lag at the switching must be taken into account also for the switching from reverse reproduction to forward reproduction. In this case, too, a similar step, namely, storage of read-in picture data for about one to two GOPs, is taken to be able to cope with this case. Suppose that the nth GOPₙ is now being read-in processed for reverse reproduction, then the picture data for this GOPₙ are held until the read-out for reverse reproduction reaches GOPₙ₋₂, which is the GOP two GOPs before it. Namely, uninterrupted reproduction, even at the switching to forward reproduction, is realized by holding certain GOP data until the read-out of the data two GOPs before it.
   The switching from reverse reproduction to forward reproduction, which can be handled by the processing at the decoder 5 only, has basically a smaller time lag than the case in (r) above. Accordingly, it seems that in actual applications, data for a little over one GOP, instead of the data for two GOPs as mentioned here, will suffice. However, it is desirable that this value be determined by experiment or the like on each model because it may vary with equipment implementation.

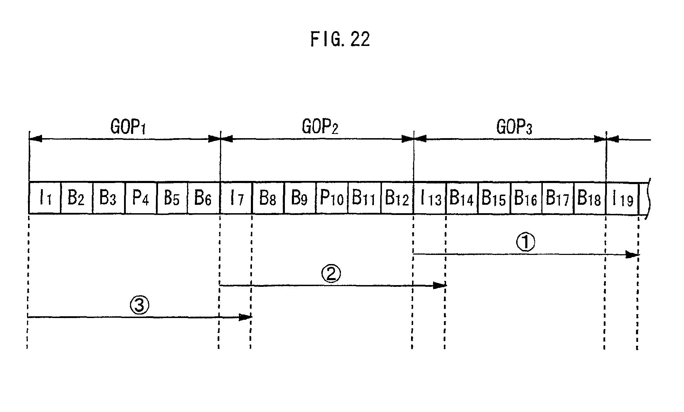

(t) Fig. 22 explains an arrangement for high-speed reverse reproduction by placing I pictures in a cache memory. Attention is paid to the I pictures being "reuse type pictures." In the same figure, for the simplicity of explanation, there are six pictures in one GOP, and the sequences of pictures in three GOPs of GOP₁ ∼ GOP₃ are expressed as I₁ ∼ B₆ for GOP₁, I₇ ∼ B₁₂ for GOP₂, and I₁₃ ∼ B₁₈ for GOP₃.
   Suppose a reverse reproduction is now requested from GOP₃, then, as mentioned above, the read-out ① of GOP₃, the read-out ② of GOP₂ and the read-out ③ of GOP₁ are carried out in this order. Here let us direct the attention to the processing of GOP₂. The first picture, or I₁₃, of GOP₃ is being read out in order to reproduce the last picture, or B₁₂. Yet, it turns out that the picture I₁₃ has already been read out once and decoded at the reverse reproduction of GOP₃. This indicates that if the decoded data of the first I picture of each GOP are cached in the memory area 4a or some other memory until the processing of a previous GOP in the MPEG data stream is completed, then trouble of decoding the picture by again reading it out will be saved. This caching can improve the processing efficiency of reverse reproduction.
(u) In many of the embodiments, the coded data for reverse reproduction are obtained by generating I pictures by the recoding by the encoder 6 and, occasionally, combining them with B pictures. However, the method is not limited to this only; other modes may be selected by those skilled in the art at their implementing stage, in which, for instance, the encoder 6 eventually generates more I pictures than the I pictures contained in the MPEG video stream at the outset.
   Changing the viewpoint, the encoder 6 may code the image data into a picture sequence of a type in which other picture of at most one is referred to for each prediction direction. The "prediction direction" is either forward direction or reverse direction, which is the former being prediction from the past or the latter from the future, respectively. Therefore, the pictures that make reference to zero or one picture only in forward and reverse directions are acceptable here.
   In the current MPEG, the I pictures and B pictures meet this condition. The essence of a question as to what kind of pictures are to be generated in the recoding lies basically in a structure necessary for forward reproduction, especially in one capable of realizing reverse reproduction while keeping the memory capacity. In the MPEG, there are cases where the P picture makes reference to a plurality of fairly far-off pictures in the forward direction, and yet, in forward reproduction, it is not necessary to hold many pictures because the decoded pictures are outputted or displayed sequentially. Conversely speaking, while, just because of the nature of forward reproduction, the P pictures can be smoothly reproduced with a relatively small frame buffer, in reverse reproduction a large number of pictures for the reproduction of the P pictures must be stored for a considerable period of time duration. Therefore, in actuality, the pictures that make reference to two or more pictures in the same prediction direction require a relatively large memory capacity for the reverse reproduction only, thus being disadvantageous in terms of cost, implementing area and so forth. Hence, it is considered necessary and sufficient for solving the problem if the picture of at most one picture is accepted for the same prediction direction, including I and B pictures.

### Industrial usability

As have been described, the present invention can be used for the image reproducing method, image processing method, and the image reproducing apparatus, image processing apparatus, television receiver and so forth implementing these methods.

## Claims

1. An image reproducing apparatus **characterized in that** it comprises:
an encoder which codes image data as an intra-frame coded image; and
a decoder which decodes coded data generated by said encoder in a reverse time-series manner.

2. An image reproducing apparatus **characterized in that** it comprises:
a first decoder which decodes first coded data inputted in a time series manner;
an encoder which codes image data generated by said first decoder as an intra-frame coded image; and
a second decoder which decodes second coded data generated by said encoder in a reverse time-series manner.

3. An image reproducing apparatus as recited in Claim 2, **characterized in that** it comprises a storage unit which temporarily stores the second coded data and outputs the stored second coded data to said second decoder in a reverse time-series manner.

4. An image reproducing apparatus as recited in Claim 3, wherein the first coded data sequence is a data sequence coded by performing at least one of an intra-frame coding processing and an inter-frame coding processing on an image signal in a predetermined unit of group, and wherein each processing by said first decoder, encoder, storage unit and second decoder is performed in the predetermined unit of group.

5. An image reproducing apparatus as recited in Claim 4, wherein, during a processing by said second decoder, coded data of a next group are processed by said first decoder.

6. An image reproducing apparatus as recited in any one of Claim 2 to Claim 5, wherein said storage unit stores coded data of the second coded data, and the stored second coded data are outputted to said first decoder in a reverse time-series manner.

7. An image reproducing apparatus as recited in any one of Claim 2 to Claim 6, wherein said encoder performs coding in compliance with MPEG or JPEG.

8. An image reproducing apparatus as recited in any one of Claim 2 to Claim 7, wherein said second decoder performs decoding in compliance with MPEG or JPEG.

9. An image reproducing apparatus as recited in any one of Claim 2 to Claim 8, wherein said first decoder includes a skip processing unit which thins out the inputted first coded data in units of picture, and generates continuous time-series image data by decoding data thinned out by said skip processing unit.

10. An image reproducing apparatus as recited in Claim 9, wherein said first decoder includes a discriminating unit which determines a type of picture of the inputted first coded data, and said skip processing unit thins out in a manner such that a picture of type which is not referred to when decoding other pictures is given priority.

11. An image reproducing method **characterized in that** it comprises:
a processing of converting image data inputted in a time series manner, to temporary coded data, by an intra-frame coding processing; and
a processing of decoding the temporary coded data by reversing along time axis,
wherein the converting processing is performed for a direct purpose of the decoding processing.

12. An image reproducing method **characterized in that** it comprises:
decoding first coded data inputted in a time series manner;
converting the decoded data to temporary coded data by an intra-frame coding processing; and
decoding the temporary coded data by reversing along time axis.

13. An image reproducing method as recited in Claim 11 or Claim 12, wherein the temporary coded data are decoded in compliance with MPEG or JPEG.

14. An image reproducing method as recited in any one of Claim 11 to Claim 13, wherein the temporary coded data are generated based on data thinned out in advance in units of picture.

15. An image reproducing method as recited in Claim 12, wherein the first coded data are generated by a processing which includes an inter-frame coding processing.

16. An image reproducing apparatus **characterized in that** it comprises:
an encoder which codes image data to a picture sequence of a type in which other picture of at most one is referred to for each prediction direction; and
a decoder which decodes coded data generated by said encoder, in a reverse time-series manner.

17. A television receiver equipped with an image reproducing apparatus as recited in any one of Claims 1, 2 and 16, whereby a reverse time-series reproduction of an image is included as part of operational specifications thereof.

18. An image reproducing apparatus as recited in Claim 2, wherein said first decoder performs a data-amount reducing processing simultaneously when said first decoder decodes the first coded data.

19. An image reproducing apparatus as recited in Claim 18, wherein said first decoder decodes in compliance with MPEG or JPEG, and IDCT thereof is performed in a down conversion format, so that a data amount is reduced.

20. An image reproducing apparatus as recited in Claim 2, wherein a group containing a plurality of pictures is regarded as a unit of processing and said first decoder performs a processing on between groups in a reverse time-series manner by reversing along time axis while said first decoder performs a time series processing within the group.

21. An image reproducing apparatus as recited in Claim 20, wherein said first decoder stores decoded data of a reuse type picture which is confirmed to be used for the processing of a next group when the processing is performed within the group.

22. An image reproducing apparatus as recited in Claim 21, wherein said first decoder decodes in compliance with MPEG or JPEG, the group is a GOP, and the reuse type picture is an I picture included in a head of each GOP.

23. An image reproducing apparatus as recited in Claim 4, wherein said first decoder decodes in compliance with MPEG or JPEG, the group is a GOP, and said storage unit stores the second coded data of a maximum of substantially 2 GOP's.

24. An image processing apparatus **characterized in that** it comprises:
a converter which converts a first coded data sequence including an I picture, P pictures and B pictures coded in compliance with MPEG, to a second coded data sequence constituted by an I picture and B pictures;
a back-end decoder which decodes the second coded data sequence generated by said converter, in a reverse time-series manner; and
a control unit which controls operation of said converter and back-end decoder.

25. An image processing apparatus as recited in Claim 24, wherein said converter includes:
a front-end decoder which decodes at least P picture data among the first coded data sequence;
an encoder which codes data decoded by said front-end decoder as an I picture in compliance with MPEG; and
a storage unit which stores the second coded data sequence.

26. An image processing apparatus as recited in Claim 25, comprising an assignment control unit which assigns a B picture included in the first coded data sequence as it is, without performing processings by said front-end decoder and encoder thereon, as a B picture included in the second coded data sequence, in accordance with a control by said control unit.

27. An image processing apparatus as recited in Claim 25 or Claim 26, wherein said front-end decoder decodes an I picture and P pictures among the first coded date sequence, and sends out data which coded the P pictures to said encoder.

28. An image processing apparatus as recited in Claim 25, comprising an assignment control unit which assigns an I picture and B pictures included in the first coded data sequence as they are, without performing processings by said front-end decoder and encoder thereon, as an I picture and B pictures included in the second coded data sequence, in accordance with a control by said control unit.

29. An image processing apparatus as recited in any one of Claims 24 to 28, wherein the first coded data sequence is data coded in a predetermined unit of group in a manner such that the pictures are assigned in a predetermined order, and wherein each processing by said converter and said back-end decoder is performed in the predetermined unit of group.

30. An image processing apparatus as recited in Claim 29, wherein coded data for a next group are processed by said converter during a processing by said back-end decoder.

31. An image processing method **characterized in that** it comprises:
a processing which converts a first coded data sequence including an I picture, P pictures and B pictures coded in compliance with MPEG, to a second coded data sequence comprised of an I picture and B pictures; and
a processing which decodes the second coded data sequence in a reverse time-series manner.

32. An image processing method as recited in Claim 31, wherein at least data excluding B pictures, among the first coded sequence, are coded as an I picture in compliance with MPEG, and other data are assigned, as kept intact, into the second coded data sequence.

33. An image processing method as recited in Claim 31 or Claim 32, wherein the first coded data sequence is data coded in a manner that the pictures are assigned in a predetermined order in predetermined units of group, and said conversion processing and said decoding processing are performed in the predetermined units of group.

34. An image processing method as recited in Claim 33, wherein during execution of said decoding processing said conversion processing is performed based on coded data of a next group.

35. A television receiver equipped with an image processing apparatus according to Claim 24, whereby reproduction of an image in a reverse time-series manner is included as part of operational specifications.

36. An image processing apparatus **characterized in that** it comprises:
a first decoder which decodes a first coded data sequence inputted;
a display control unit which generates a video signal based on image data generated by said first decoder;
an encoder which codes the image data generated by said first decoder as an intra-frame coded image; and
a storage unit which stores a second coded data sequence generated by said encoder.

37. An image processing apparatus as recited in Claim 36, structured in a manner such that image data generated by said first decoder are inputted to said display control unit and said encoder in parallel.

38. An image processing apparatus as recited in Claim 36 or Claim 37, wherein the first coded data sequence is a data sequence which is coded by performing at least one of an intra-frame coding processing or an inter-frame coding processing on an image signal in a predetermined unit of group, and wherein each processing by said first decoder, encoder and storage unit is performed in the predetermined unit of group.

39. An image processing apparatus as recited in any one of Claim 36 to Claim 38, **characterized in that** it comprises a second decoder which decodes the second coded data sequence stored in said storage unit in a reverse time-series manner.

40. An image processing apparatus as recited in Claim 39, wherein during a processing by said second decoder a coded data sequence of a next group is processed by said first decoder.

41. An image processing apparatus as recited in Claim 39 or Claim 40, comprising a switching unit which inputs image data generated by said first decoder to said display control unit at the time of forward reproduction, and inputs image data generated by said second decoder to said display control unit at the time of reverse reproduction.

42. An image processing method **characterized in that** it comprises:
decoding an inputted first coded data sequence in a time series manner;
coding the decoded data as an intra-frame coded image so as to be stored while generating a video signal based on the decoded data in parallel.

43. An image processing method as recited in Claim 42, wherein the coded data sequence stored is decoded by reversing along time axis, and a reverse reproduction picture is obtained by generating the video signal based on the decoded data.

44. An image processing method as recited in Claim 42 or Claim 43, wherein the first coded data sequence is inputted in a predetermined unit of group.

45. An image processing apparatus **characterized in that** it comprises:
a first decoder which decodes a first coded data sequence inputted;
a display control unit which generates a video signal based on image data generated by said first decoder;
an encoder which codes image data generated by said first decoder to a second coded data sequence which is a picture sequence of a type in which other picture of at most one is referred to for each prediction direction; and
a storage unit which stored the second coded data sequence.

46. An image processing method **characterized in that** it comprises:
decoding a first coded data sequence inputted in a time series manner;
coding the decoded data to a picture sequence of a type in which other picture of at most one is referred to for each prediction direction so as to be stored while generating a video signal based on the decoded data in parallel.

47. A television receiver equipped with an image processing apparatus as recited in any one of Claim 36 and Claim 45, wherein generation of a video signal is consigned to the image processing apparatus.

48. An image processing apparatus **characterized in that** it comprises:
a reduction processing unit which reduces a data amount of image data;
an encoder which codes image data from said reduction processing unit as an intra-frame coded image;
a back-end decoder which decodes a coded data sequence generated by said encoder in a reverse time-series manner; and
a control unit which controls a series of processings in an overall and supervised manner.

49. An image processing apparatus **characterized in that** it comprises:
a front-end decoder which decodes a first coded data sequence;
a reduction processing unit which reduces a data amount of image data generated by said front-end decoder;
an encoder which codes image data from said reduction processing unit as an intra-frame coded image;
a back-end decoder which decodes an coded data sequence generated by said encoder in a reverse time-series manner; and
a control unit which controls a series of processings in an overall and supervised manner.

50. An image processing apparatus as recited in Claim 48 or Claim 49, comprising a restoration processing unit which substantially restores a data amount of image data decoded by said back-end decoder.

51. An image processing apparatus as recited in any one of Claim 48 to Claim 50, comprising a storage unit which temporarily stores coded data generated by said encoder.

52. An image processing apparatus as recited in any one of Claim 48 to Claim 51, wherein said reduction processing unit reduces the number of pixels for the image data.

53. An image processing apparatus as recited in any one of Claim 48 to Claim 51, wherein said reduction processing unit thins out the image data in units of frame.

54. An image processing apparatus as recited in Claim 50, wherein said reduction processing unit thins out the image data in units of frame, and said restoration processing unit repeatedly outputs image data decoded by said back-end decoder.

55. An image processing apparatus as recited in any one of Claim 48 to Claim 51, wherein the first coded data sequence is a data sequence coded by performing at least one of an intra-frame coding processing and an inter-frame coding processing on an image signal in a predetermined unit of group, and wherein a series of processings based on control of said control unit is performed in the predetermined unit of group.

56. An image processing apparatus as recited in Claim 55, wherein during a processing by said back-end decoder a coded data sequence of a next group is processed by said front-end decoder.

57. An image processing apparatus as recited in Claim 49, wherein said front-end decoder includes a skip processing unit which thins out the inputted first coded data sequence in units of frame, and generates continuous time-series image data by decoding data thinned out by said skip processing unit.

58. An image processing method **characterized in that** it comprises:
a processing of reducing a data amount of image data inputted;
a processing of coding image data whose data amount is reduced, as an intra-frame coded image;
a processing of decoding an coded data sequence thereof by reversing along time axis; and
a processing of substantially restoring a data amount of decoded image data.

59. An image processing method **characterized in that** it comprises:
a processing of decoding a first coded data sequence inputted;
a processing of reducing a data amount of decoded data thereof;
a processing of coding image data whose data amount is reduced, as an intra-frame coded image;
a processing of decoding an coded data sequence thereof by reversing along time axis; and
a processing of substantially restoring a data amount of decoded image data.

60. An image processing method as recited in Claim 58 or Claim 59, further comprising a processing of temporarily storing the coded data sequence.

61. An image processing apparatus **characterized in that** it comprises:
a reduction processing unit which reduces a data amount of image data;
an encoder which codes the image data, from said reduction processing unit, to a picture sequence of a type in which other picture of at most one is referred to for each prediction direction;
a decoder which decodes a coded data sequence generated by said encoder in a reverse time-series manner; and
a control unit which controls a series of processings in an overall and supervised manner.

62. An image processing method **characterized in that** it comprises:
a processing of reducing a data amount of image data inputted;
a processing of coding image data, whose data amount is reduced, to a picture sequence of a type in which other picture of at most one is referred to for each prediction direction;
a processing of decoding the coded data sequence by reversing along time axis; and
a processing of substantially restoring a data amount of the decoded image data.

63. A television receiver equipped with an image processing apparatus as recited in any of Claims 48, 49 and 61, whereby a reverse time-series reproduction of an image is included as part of operational specifications thereof.

64. An image processing apparatus as recited in any one of Claim 48 to Claim 51, wherein said reduction processing unit thins out the image data in units of field.

65. An image processing apparatus as recited in Claim 50, wherein said reduction processing unit thins out the image data in units of field, and said restoration processing unit repeatedly outputs image data decoded by said back-end decoder.

66. An image processing apparatus, **characterized in that** a decoder for first picture data comprised of a plurality of pictures and a decoder for second picture data which appear at a processing stage different from that of the first picture data, are put to common use.

67. An image processing apparatus as recited in Claim 66, **characterized in that** it comprises a switching unit which switches the first picture data and the second picture data for every predetermined picture so as to be inputted to said decoder.

68. An image processing apparatus as recited in Claim 66 or Claim 67, comprising an encoder which codes data decoded by said decoder as an intra-frame coded image, based on the first picture data.

69. An image processing apparatus as recited in Claim 68, **characterized in that** it comprises a storage unit which temporarily stores data coded by said encoder and outputs the stored data to said decoder as the second picture data in a reverse time-series manner.

70. An image processing apparatus as recited in Claim 69, wherein the first picture data are data coded by performing at least one of an intra-frame coding processing and an inter-frame coding processing on an image signal in a predetermined unit of group, and wherein each processing by said decoder, encoder and storage unit is performed in the predetermined unit of group.

71. An image processing apparatus as recited in any one of Claim 67 to Claim 70, wherein said decoder performs decoding in compliance with specifications of MPEG video part or JPEG video part.

72. An image processing apparatus as recited in any one of Claim 67 to Claim 71, wherein said encoder performs coding in compliance with specifications of MPEG video part or JPEG video part.

73. An image processing apparatus as recited in any one of Claim 67 to Claim 72, wherein a first decoder includes a skip processing unit which thins out the inputted first coded data in units of picture, and generates continuous time-series image data by decoding data thinned out by said skip processing unit.

74. An image processing apparatus as recited in Claim 73, wherein said first decoder includes a discriminating unit which determines a type of picture of the inputted first coded data, and said skip processing unit thins out in a manner such that a picture of type which is not referred to when decoding other pictures is given priority.

75. An image processing apparatus as recited in Claim 66 or Claim 67, wherein an encoder is put to common use in place of said decoder.

76. An image processing method including: decoding, for every predetermined picture, first picture data comprised of a plurality of pictures and second picture data, comprised of a plurality of pictures, which appear at a processing stage different from that of the first picture data.

77. An image processing method as recited in Claim 76, wherein data which are sequentially decoded based on the first picture data are coded as an intra-frame coded image.

78. An image processing method as recited in Claim 77, wherein the second picture data are generated by storing temporarily the coded data and reading the stored data in a reverse time-series manner.

79. An image processing method as recited in Claim 77 or Claim 78, wherein the first picture data are data coded by performing at least one of an intra-frame coding processing and an inter-frame coding processing on an image signal in a predetermined unit of group, and wherein the coding is performed in the predetermined unit of group.

80. An image processing method as recited in Claim 76, wherein a coding processing is performed in place of the decoding processing.

81. A television receiver equipped with an image processing apparatus as recited in any one of Claim 66 and Claim 75, wherein said decoder or encoder is put to common use and utilized in said apparatus.

82. An image reproducing apparatus, including a decoder which decodes, in a reverse time-series manner, coded data generated in a time series manner, and which repeatedly outputs image data obtained by the decoding until the number of times set is reached.

83. An image reproducing apparatus **characterized in that** it comprises:
an encoder which codes image data inputted in a time series manner, as an intra-frame coded image; and
a decoder which decodes coded data generated by said encoder, in a reverse time-series manner, so as to be repeatedly outputted.

84. An image reproducing apparatus **characterized in that** it comprises:
a first decoder which decodes first coded data inputted in a time series manner;
an encoder which codes image data generated by said first encoder, as an intra-frame coded image; and
a second decoder which decodes second coded data generated by said encoder, in a reverse time-series manner, so as to be repeatedly outputted.

85. An image reproducing apparatus as recited in Claim 84, wherein said encoder codes one among the same image data outputted from said first decoder a plurality of times.

86. An image reproducing apparatus as recited in Claim 84 or Claim 85, wherein the number of outputs of the same image data by said first decoder is equal to that of the same image data by said second decoder.

87. An image reproducing apparatus as recited in any one of Claim 83 to Claim 86, comprising a storage unit which stores temporarily the second coded data and outputs the stored second coded data to said second decoder in a reverse time-series manner.

88. An image reproducing apparatus as recited in Claim 87, wherein the first coded data are data coded by performing at least one of an intra-frame coding processing and an inter-frame coding processing on an image signal in a predetermined unit of group, and wherein each processing by said first decoder, encoder, storage unit and second decoder is performed in the predetermined unit of group.

89. An image reproducing apparatus as recited in Claim 88, wherein, during a processing by said second decoder, coded data of a next group are processed by said first decoder.

90. An image reproducing apparatus as recited in any one of Claim 83 to Claim 89, wherein said second decoder decodes the second coded data in compliance with MPEG or JPEG.

91. An image reproducing method, including decoding continuous time-series coded data by reversing along time axis and repeatedly outputting the decoded data until the predetermined number of times set is reached.

92. An image reproducing method **characterized in that** it comprises:
coding image data inputted in a time series manner, as an intra-frame coded image; and
decoding the coded data by reversing along time axis so as to be repeatedly outputted.

93. An image reproducing method **characterized in that** it comprises:
decoding first coded data inputted in a time series manner;
coding the decoded data as an intra-frame coded image; and
decoding the coded data in a reverse time-series manner so as to be repeatedly outputted.

94. An image reproducing method **characterized in that** it comprises:
decoding fist coded data inputted in a time series manner, and repeatedly outputting the decoded data;
coding one among the repeatedly outputted continuous same decoded data, as an intra-frame coded image; and
decoding the coded data in a reverse time-series manner and repeatedly outputting the decoded data.

95. An image reproducing method as recited in any one of Claim 92 to Claim 94, wherein the coded data which are coded as the intra-frame coded image are decoded in compliance with MPEG or JPEG.

96. An image reproducing apparatus, including a decoder which decodes, in a reverse time-series manner, coded data which were generated in a time-series manner after going through a processing including an inter-frame coding processing, so as to be repeatedly outputted.

97. An image reproducing apparatus **characterized in that** it comprises:
an encoder which codes image data inputted in a time series manner to a picture sequence of a type in which other picture of at most one is referred to for each prediction direction; and
a decoder which decodes, in a reverse time-series manner, coded data generated by said encoder, and repeatedly outputs the decoded data.

98. An image reproducing method **characterized in that** it comprises:
coding image data inputted in a time series manner to a picture sequence of a type in which other picture of at most one is referred to for each prediction direction; and
decoding the coded data by reversing along time axis, and repeatedly outputting the decoded data.

99. An image reproducing method **characterized in that** it comprises:
acquiring continuous time-series coded data which are generated after going through a processing including an inter-frame coding processing;
decoding the coded data by reversing along time axis; and
repeatedly outputting the decoded data.

100. A television receiver equipped with an image reproducing apparatus as recited in any one of Claim 82 to Claim 84 and Claim 97, whereby a reverse-time series repeat-reproduction of an image is included as part of operational specifications thereof.
